(19) Europäisches Patentamt
European Patent Office
Office européen des brevets

(11) Veröffentlichungsnummer: **0 005 754**
**B1**

# (12) EUROPÄISCHE PATENTSCHRIFT

(45) Veröffentlichungstag der Patentschrift: **15.07.81**

(51) Int. Cl.³: **A 01 N 43/50,** A 01 N 43/64, C 07 D 233/60, C 07 D 249/08

(21) Anmeldenummer: **79101442.6**

(22) Anmeldetag: **11.05.79**

## (54) Mittel und Verfahren zur Regulierung des Pflanzenwachstums.

(30) Priorität: **19.05.78 DE 2821829**

(43) Veröffentlichungstag der Anmeldung: **12.12.79 Patentblatt 79/25**

(45) Bekanntmachung des Hinweises auf die Patenterteilung: **15.07.81 Patentblatt 81/28**

(84) Benannte Vertragsstaaten: **AT BE CH DE FR GB IT LU NL SE**

(56) Entgegenhaltungen:
**EP-A-0 000 752**
**DE-A-2 645 496**
**US-A-3 824 312**

(73) Patentinhaber: **BASF Aktiengesellschaft, Carl-Bosch-Strasse 38, D-6700 Ludwigshafen (DE)**

(72) Erfinder: **Jung, Johann, Dr., Diplom.-Landwirt, Hardenburgstrasse 19, D-6703 Limburgerhof (DE)**
Erfinder: **Zeeh, Bernd, Dr., Thorwaldsenstrasse 5, D-6700 Ludwigshafen (DE)**
Erfinder: **Rentzea, Costin, Dr., Neuenheimer Landstrasse 72, D-6900 Heidelberg (DE)**
Erfinder: **Sauter, Hubert, Dr., Goethestrasse 23, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 005 754 B1

ACTORUM AG.

Fassung für folgende Vertragsstaaten: BE, CH, DE, FR, GB, LU, NL + SE

Mittel und Verfahren zur Regulierung des Pflanzenwachstums

Die vorliegende Erfindung betrifft Verfahren zur Regulierung des Wachstums von Rapspflanzen mittels α-Azolylsulfiden und deren Derivaten, α-Azolylsulfoxiden und α-Azolylsulfonen oder deren Salzen oder Metallkomplexen.

In der EP-OS 0 000 752 werden Alpha-Azolylsulfide und deren Derivate sowie ihre Anwendung als Fungizide beschrieben. Ein Hinweis auf die Anwendung dieser Verbindungen auf Rapspflanzen findet sich dort nicht.

Es ist bekannt, stickstoffhaltige Verbindungen wie Chlorcholinchlorid (CCC) (J. Biol. Chem. 235, 475 (1960)) zur Regulierung des Pflanzenwachstums zu verwenden.

Pflanzenwachstumsregulatoren können z.B. eine Reduzierung des Längenwachstums oder einen Keim-, Knospen- oder Blütenaustrieb zu einem Zeitpunkt auslösen, an dem die Nutzpflanzen normalerweise hierzu keine Bereitschaft zeigen.

Ferner können solche Wirkstoffe die Frostresistenz erhöhen, die Ausbildung von Seitentrieben fördern oder hemmen oder ein Entblättern bzw. einen Fruchtabfall verursachen, wodurch z.B. eine Ernteerleichterung ermöglicht wird.

Bei der Anwendung des bekannten Chlorcholinchlorids als Mittel zur Regulierung des Pflanzenwachstums z.B. an Getreidearten, bei der ein gedrungener Wuchs zur Unterbindung des Lagerns erreicht werden soll, ist die Wirkung oft nicht ausreichend.

Es wurde nun gefunden, dass Mittel zur Regulierung des Pflanzenwachstums, die α-Azolylsulfide und deren Derivate der Formel

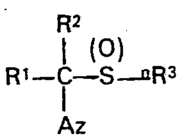 (I)

in der

$R^1$ Wasserstoff, Alkyl, Methoxycarbonyl oder gegebenenfalls substituiertes Aryl

$R^2$ Wasserstoff oder Alkyl

$R^3$ Alkyl, Alkenyl, Alkinyl, gegebenenfalls substituiertes Phenyl oder gegebenenfalls substituiertes Aralkyl

Az Imidazol-1-yl, 1,2,4-Triazol-1-yl oder 1,2,4-Triazol-4-yl

und

n 0, 1 oder 2 bedeuten oder deren Salze oder Metallkomplexe

enthalten, eine sehr gute pflanzenwachstumsregulierende Wirksamkeit und hervorragende Pflanzenverträglichkeiten zeigen.

$R^1$ bedeutet beispielsweise Wasserstoff, Methyl, Ethyl, n-Propyl, Isopropyl, n-Butyl, n-Pentyl, n-Hexyl, Methoxycarbonyl, Phenyl, 4-Nitrophenyl, 4-Bromphenyl, 4-Cyanphenyl, 2-Methylphenyl, 4-6-Butylphenyl, 3-Trifluormethylphenyl, 4-Trifluormethylphenyl, 4-Fluorpehnyl, 2-Chlorphenyl, 4-Chlorphenyl, 4-Bromphenyl, 2,4-Dichlorphenyl, 2,6-Dichlorphenyl, 3,4-Dichlorphenyl, α-Naphthyl.

$R^2$ bedeutet beispielsweise Wasserstoff, Methyl, n-Propyl.

$R^3$ bedeutet beispielsweise Methyl, Ethyl, n-Propyl, Isopropyl, n-Butyl, t-Butyl, n-Pentyl, n-Hexyl, Allyl, Propargyl, Phenyl, 4-Methoxyphenyl, 4-Tolyl, 4-Chlorphenyl, 3,4-Dichlorphenyl, 2,4-Dichlorphenyl, 2,3,6-Trichlorphenyl, Benzyl, 3-Trifluormethylbenzyl, 4-Chlorbenzyl, 4-Brombenzyl, 3,4-Dichlorbenzyl, 2,4-Dichlorbenzyl, 2,3,6-Trichlorbenzyl, 2-Phenylethyl.

Salze sind beispielsweise die Hydrochloride, Bromide, Sulfate, Nitrate, Phosphate, Oxalate ode Dodecylbenzolsulfonate. Die Wirksamkeit der Salze geht auf das Kation zurück, so dass die Wahl des Anions beliebig ist.

Metallkomplexe sind Verbindungen der Formel

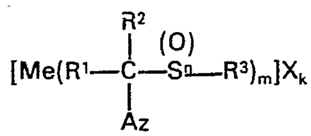 (II)

in der

$R^1$, $R^2$, $R^3$, Az und n die oben angegebene Bedeutung haben und

Me ein Metall, z.B. Kupfer, Zink, Zinn, Mangan, Eisen, Cobalt oder Nickel bedeutet

X das Anion einer anorganischen Säure bedeutet, z.B. Salzsäure, Schwefelsäure, Phosphorsäure, Bromwasserstoffsäure,

m und k 1, 2, 3 oder 4 bedeuten.

Weiterhin wurde gefunden, dass man α-Azolylsulfide der Formel I (mit n = 0) erhält, wenn man α-Chlorsulfide der Formel

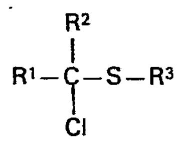 (III)

in welcher

$R^1$, $R^2$ und $R^3$ die oben angegebenen Bedeutungen haben, mit den Azolen H–Az, in denen Az die oben angegebene Bedeutung hat, gegebenenfalls in Gegenwart einer Base und gegebenenfalls in Gegenwart eines Verdünnungsmittels umsetzt. Durch Oxidation der so erhaltenen α-Azolylsulfide der Formel I (n = 0) erhält man die α-Azolylsulfoxide der Formel I (n = 1) und die α-Azolylsulfone der Formel I (n = 2).

Zur Herstellung der α-Azolylsulfide der Formel I (n = 0) ist es zweckmässig, die α-Chlorsulfide der Formel III ohne Verdünnungsmittel oder in Gegenwart eines Verdünnungsmittels mit etwa 0,5 bis 2 Äquivalenten eines Alkalisalzes des jeweiligen Azols oder mit etwa 0,5 bis 4 Äquivalenten des jeweiligen Azols, gegebenenfalls unter Zusatz von 0,5 bis 4 Äquivalenten einer Base bei

Temperaturen von etwa 0 bis 200 °C, vorzugsweise +20 °C bis +160 °C in homogener oder inhomogener Phase umzusetzen.

Als Verdünnungsmittel können z.B. Methanol, Äthanol, Isopropanol, n-Butanol, Diäthyläther, Tetrahydrofuran, Dioxan, Aceton, Acetonitril, Dimethylformamid, Dimethylsulfoxid, Chloroform, Methylenchlorid oder Toluol verwendet werden. Als Basen können z.B. organische Amine wie Triäthylamin, Pyridin oder anorganische Verbindungen, z.B. Kaliumcarbonat oder Natriumhydroxid verwendet werden.

Die als Ausgangsstoffe verwendeten α-Chlorsulfide III sind z.T. aus der Literatur bekannt oder können nach literaturbekannten Verfahren hergestellt werden, z.B.

a) durch Chlorierung von Sulfiden mit N-Chlorsuccinimid (siehe z.B. B.L. Tuleen und T.B. Stephens, J. Org. Chem. 34, 31 (1969)) nach dem Schema

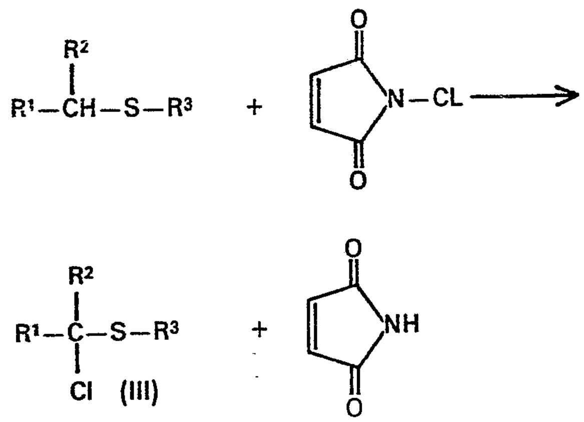

oder

b) durch Umsetzung von Aldehyden mit Thiolen in Gegenwart von Chlorwasserstoff (siehe z.B. H. Böhme, H. Fischer und R. Frank, Liebigs Ann. Chem. 563, 54 (1949)) nach dem Schema

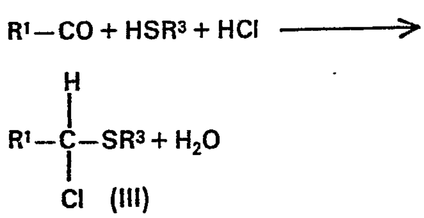

Zur Herstellung der α-Azolylsulfoxide der Formel I (n = 1) setzt man die α-Azolylsulfide gegebenenfalls in Gegenwart eines Verdünnungsmittels mit etwa einem Äquivalent eines geeigneten Oxidationsmittels bei Temperaturen zwischen etwa -30 und +100 °C um. Die α-Azolylsulfone (Formel I, n = 2) erhält man in ähnlicher Weise bei der Oxidation der α-Azolylsulfide (I, n = 0) mit mindestens zwei Äquivalenten eines geeigneten Oxidationsmittels oder bei der Oxidation der α-Azolylsulfoxide (I, n = 1) mit mindestens einem Äquivalent eines Oxidationsmittels.

Als Oxidationsmittel können beispielsweise Kaliumpermanganat, Wasserstoffperoxid oder Percarbonsäuren wie Peressigsäure, Perbenzoesäure oder 3-Chlorperbenzoesäure verwendet werden. Als Verdünnungsmittel können z.B. Wasser, Essigsäure, Methanol, Aceton, Chloroform oder Methylenchlorid verwendet werden. Ein bevorzugtes Verfahren zur Herstellung der Sulfoxide (I, n = 1) ist die Umsetzung der Sulfide (I, n = 0) mit einem Äquivalent 3-Chlorperbenzoesäure in Methylenchlorid bei 0 bis 25 °C. Ein bevorzugtes Verfahren zur Herstellung der Sulfone ist die Umsetzung der Sulfide (I, n = 0) mit zwei Äquivalenten 3-Chlorperbenzoesäure in Methylenchlorid bei 15 bis 41 °C.

Die Verbindungen der Formel I (n = 0, 1, 2) sind in vielen organischen Lösungsmitteln, z.B. in Essigester, Aceton, Äthanol, Methylenchlorid, Chloroform, Dimethylsulfoxid, Dimethylformamid und N-Methylpyrrolidon leicht lösliche Substanzen. Die α-Azolylsulfide (I, n = 0) sind darüber hinaus auch in Toluol gut löslich.

Sie lassen sich mit Säuren in ihre Salze, z.B. Hydrochloride, Sulfate, Nitrate, Oxalate, Formiate, Acetate oder Dodecylbenzylsulfonate überführen.

Ferner wurde gefunden, dass man die Metall-Komplexe der Formel II erhält, wenn man α-Azolylsulfide bzw. deren Derivate der Formel I mit Metallsalzen der Formel

$$MeX_k \cdot a\,H_2O \qquad (IV)$$

in welcher

Me, X und k die oben angegebene Bedeutung haben und a 0, 1, 2, 3 oder 4 bedeutet, in Gegenwart eines Lösungsmittels umsetzt. Hier steht Me vorzugsweise für Metalle der I., II. und IV. bis VIII. Nebengruppe des Periodensystems der Elemente sowie für Metalle der II. und IV. Hauptgruppe, insbesondere für Kupfer, Zink, Zinn, Mangan, Eisen, Cobalt oder Nickel.

Die Metallsalze der Formel IV sind allgemein bekannte, leicht zugängliche Verbindungen.

Für die Herstellung der Metall-Komplexe der Formel II kommen alle mit Wasser mischbaren Lösungsmittel in Frage. Hierzu gehören vorzugsweise Methanol, Äthanol, Isopropanol, Aceton, Tetrahydrofuran und Dioxan. Dabei arbeitet man im allgemeinen bei Temperaturen zwischen 0 und 100 °C, vorzugsweise zwischen 10 und 35 °C.

Die Sulfide (I, n = 0) und Sulfone (I, n = 2) enthalten jeweils ein asymmetrisches Kohlenstoffatom und fallen demgemäss als Enantiomerengemische an, die in die optisch aktiven Verbindungen getrennt werden können. Im Falle der Sulfoxide I (n = 1) treten durch das dem asymmetrischen Kohlenstoff benachbarte asymmetrische Schwefelatom Diastereomerengemische auf, die in üblicher Weise, z.B. durch Kristallisation oder Chromatographie in die einzelnen Komponenten getrennt werden können. Für die Anwendung als Mittel zur Regulierung des Pfanzenwachstums ist jedoch eine Trennung der Enantiomeren oder Diastereomeren normalerweise nicht erforderlich.

Beispiel 1

tert.-Butyl-[(2,4-dichlorphenyl)-1,2,4-triazol-1-yl-methyl]-sulfid

Zur Lösung von 22,1 g 1,2,4-Triazol in 500 ml wasserfreiem Aceton gibt man 60,5 g tert.-Butyl-[(2,4-dichlorphenyl)-chlormethyl]-sulfid. Nach Zugabe von 44,2 g feingepulvertem Kaliumcarbonat erhitzt man die Mischung unter Rühren sieben Stunden am Rückfluss. Danach filtriert man die unlöslichen Bestandteile ab, engt das Filtrat im Vakuum zur Trockene ein und versetzt den Rückstand mit 300 ml Wasser. Man extrahiert die wässrige Phase 3mal mit je 200 ml Methylenchlorid, wäscht die vereinigten Extrakte mit 200 ml Wasser, trocknet sie und engt im Vakuum ein. Nach Zugabe von 100 ml Diisopropyläther gewinnt man aus dem Rückstand 35,6 g (53%) farblose Kristalle vom Schmp. 95 bis 97 °C (Verbindung Nr. 32).

$^1$H-NMR (100 MHz, $CDCl_3$): $\delta$ = 1,3 (s, 9H), 6,95 (s, 1H), 7,0–7,4 (m, 3H, ABX), 8,0 (s, 1H), 8,8 ppm (s, 1H).

Beispiel 2

Bis-{tert.-butyl-[(2,4-dichlorphenyl)-1,2,4-triazol-1-yl-methyl]-sulfid}-kupfer-(II)-chlorid

Zur Lösung von 9,5 g tert.-Butyl-[(2,4-dichlorphenyl)-1,2,4-triazol-1-yl-methyl]-sulfid in 100 ml Äthanol tropft man 15 ml einer molaren äthanolischen Lösung von Kupfer-(II)-chlorid-dihydrat. Aus dieser tiefblauen Lösung isoliert man nach zweitägigem Stehen bei 0 °C 9,8 g blaue Kristalle, die mit Äthanol und Äther gewaschen werden. Schmp. 130 °C.

Beispiel 3

1-Pentyl-[1-(1,2,4-triazol-1-yl)-pentyl-(1)]-sulfid

Zur Suspension von 13,0 g Natriumhydrid in 100 ml Dimethylformamid tropft man unter Rühren eine Lösung von 43,5 g Triazol in 200 ml Dimethylformamid. Nach Beendigung der Wasserstoffentwicklung tropft man zu der auf Raumtemperatur abgekühlten Mischung 97,0 g 1-Pentyl-[1-chlorpentyl-(1)]-sulfid hinzu, wobei sich das Gemisch erwärmt. Anschliessend rührt man noch acht Stunden bei 80 °C. Die Reaktionsmischung wird sodann im Vakuum eingeengt, mit 500 ml Wasser versetzt und 5mal mit Methylenchlorid extrahiert. Die vereinigten und eingeengten Extrakte chromatographiert man an Kieselgel (5×70 cm) zunächst unter Verwendung von Methylenchlorid als Laufmittel. Nach Durchlauf der ersten bräunlichen Zone werden steigende Mengen Aceton zugesetzt (bis 10% Aceton). Als zweite Zone isoliert man so 15,0 g Produkt als blassgelbes Öl (Verbindung Nr. 42). IR (Film): 2947, 2922, 2855, 1495, 1460, 1270, 1190, 1132, 1008, 676 $cm^{-1}$.

$^1$H-NMR (270 MHz, $CDCl_3$): $\delta$ = 0,9 («tr», 6H), 1,3 (m, 8H), 1,5 (m, 2H), 2,1 (m, 2H), 2,4 (m, 2H), 5,4 (tr, 1H), 8,0 (s, 1H), 8,4 ppm (s, 1H).

Beispiel 4

1-Pentyl-[1-(1,2,4-triazol-1-yl)-pentyl-(1)]-sulfon

Zur Lösung von 10,0 g 85prozentiger 3-Chlorperbenzoesäure in 140 ml Methylchlorid tropft man unter Rühren und Eiskühlung eine Lösung von 6,0 g 1-Pentyl-[1-(1,2,4-triazol-1-yl)-pentyl-(1)]-sulfid. Nach Abklingen der anfänglichen Erwärmung rührt man noch 2 Tage bei 25 °C. Die Mischung wird dann mit Natriumcarbonatlösung, Natriumsulfitlösung und Wasser gewaschen und die organische Phase getrocknet. Nach dem Einengen bleibt ein hellgelbes Öl, aus dem beim Anreiben mit Diisopropyläther 3,5 g farblose Kristalle vom Schmp. 69 bis 71 °C gewonnen werden.

NMR ($CDCl_3$, 100 MHz): $\delta$ = 0,9 (m, 6H), 1,4 (m, 8H), 1,8 (m, 2H), 2,5 (m, 2H), 2,8 («dd», 2H), 5,4 (dd, 1H), 8,1 (s, 1H), 8,5 ppm (s. 1H).

Beispiel 5

tert.-Butyl-[(2-methylphenyl)-imidazol-1-yl-methyl]-sulfid

Zur Lösung von 43,6 g Imidazol in 300 ml Aceton tropft man unter Rühren 82 g tert.-Butyl-[(2-methylphenyl)-chlormethyl]-sulfid. Nach Zugabe von 88 g feingepulvertem Kaliumcarbonat erhitzt man 5 Stunden am Rückfluss. Danach wird von den ungelösten Bestandteilen abfiltriert und das Filtrat eingeengt. Der mit 300 ml Wasser versetzte Rückstand wird mit 3×200 ml Methylenchlorid extrahiert. Aus den vereinigten organischen Phasen bleiben nach Waschen mit Wasser, Trocknen und Einengen 69 g eines bräunlichen Öls zurück, die in 1 l Diisopropyläther gelöst werden. Durch tropfenweise Zugabe von 90 ml einer 2,85-molaren Lösung von Chlorwasserstoff in Diisopropyläther unter Rühren fallen aus dieser Lösung blassgelbe Kristalle des Hydrochlorids, die aus Aceton umkristallisiert werden, an. Man erhält so 51 g farbloses tert.-Butyl-[(2-methylphenyl)-imidazol-1-yl-methyl]-sulfidhydrochlorid vom Schmp. 168 bis 170 °C (Verbindung Nr. 73).

Nach Übergiessen des Hydrochlorids mit einer wässrigen Lösung von 25 g natriumhydrogencarbonat extrahiert man die freie Base mit 3×200 ml Äther. Nach dem Trocknen und Einengen fällt sie als blassgelbes Öl (27 g) an. IR (Film): 3105, 2951, 1462, 1225, 1077, 904, 846, 751, 744, 665, 660 $cm^{-1}$.

$^1$H-NMR (60 MHz, $CDCl_3$): $\delta$ = 1,3 (s, 9H), 2,4 (s, 3H), 6,25 (s, 1H), 6,7–7,1 (m, 6H), 7,65 ppm (dd, 1H).

Entsprechend werden die in der Tabelle 1 aufgeführten Verbindungen hergestellt.

Tabelle 1

| Verbindung Nr.*) | R¹ | R² | Az (Salz) | n | R³ | Schmp. (°C) |
|---|---|---|---|---|---|---|
| 1 | 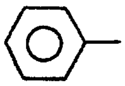 | H | 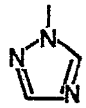 | 0 | 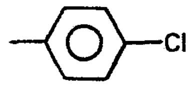 | 100–103 |
| 2 | 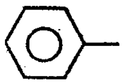 | H | 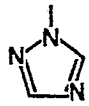 | 0 | 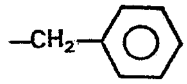 | IR(Film): 3060, 3020, 1492, 1450, 1271, 1190, 1131, 1008, 695, 677, 658 $cm^{-1}$. |
| 3 | 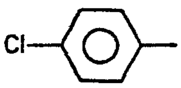 | H | 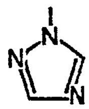 | 0 | 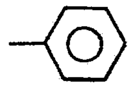 | 98 |
| 4 | 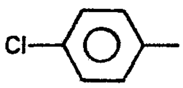 | H | 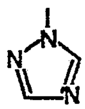 | 0 | 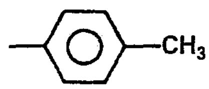 | 130 |
| 5 | 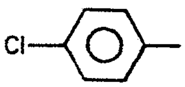 | H | 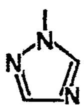 | 0 | 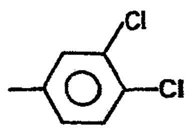 | 102 |
| 6 | 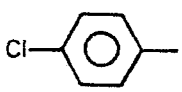 | H | 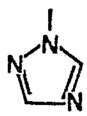 | 0 | 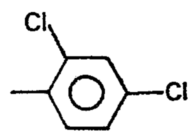 | 135–137 |
| 7 | 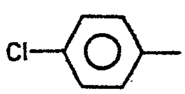 | H | 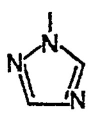 | 0 | 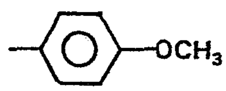 | 116 |
| 8 | 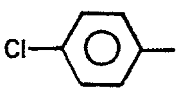 | H | 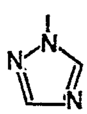 | 0 | 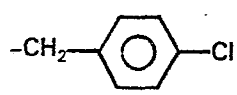 | 57–58 |
| 9 | 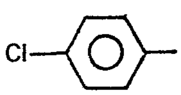 | H | 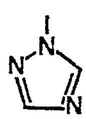 | 0 | Äthyl | IR(Film): 2965, 2925, 1490, 1271, 1131,1088, 1010, 675 cm |

*) DieStrukturen aller aufgeführten Verbindungen wurden durch $^1$H-NMR-Spektren bestätigt.

Tabelle 1 (Fortsetzung)

| Verbindung Nr. | R¹ | R² | Az (Salz) | n | R³ | Schmp. (°C) |
|---|---|---|---|---|---|---|
| 10 | 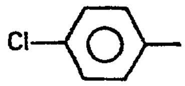 | H | 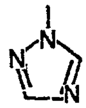 | 0 | n-Butyl | IR(Film): 2945, 2920, 1486, 1268, 1127, 1084, 1007, 671 cm |
| 11 | 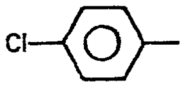 | H | 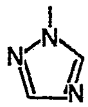 | 0 | tert.-Butyl | 95 |
| 12 | 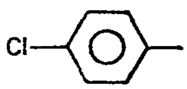 | H | 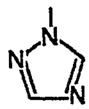 | 1 | tert.-Butyl | 125–128*) |
| 13 | 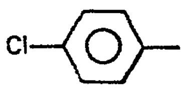 | H | 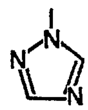 | 2 | tert.-Butyl | 150 |
| 14 | 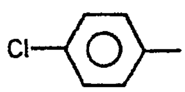 | H | 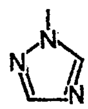 | 0 | Allyl | IR(Film): 3054, 1489, 1403, 1270, 1130, 1087, 1007, 672 $cm^{-1}$ |
| 15 | 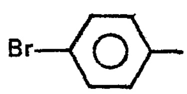 | H | 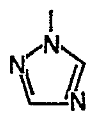 | 0 | tert.-Butyl | 77–78 |
| 16 | 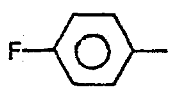 | H | 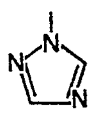 | 0 | tert.-Butyl | 102–104 |
| 17 | 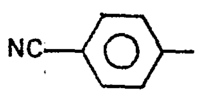 | H | 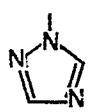 | 0 | tert.-Butyl | 73–75 |
| 18 | 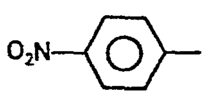 | H | 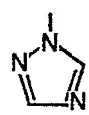 | 0 | tert.-Butyl | 76–78 |
| 19 | 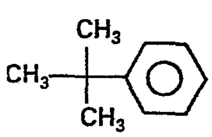 | H | 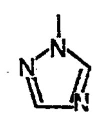 | 0 | tert.-Butyl | 94 |
| 20 | H | H | 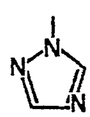 | 0 | 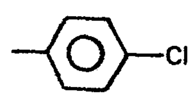 | 47–49 |
| 21 | 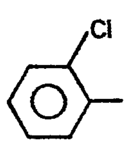 | H | 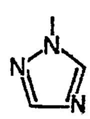 | 0 | 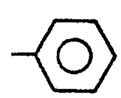 | 91 |

*) Diastereomerengemisch der Sulfoxide

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 22 | 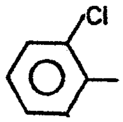 | H | 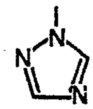 | 0 | tert.-Butyl | 84 |
| 23 | 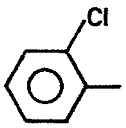 | H | 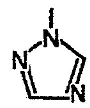 | 1 | tert.-Butyl | 154–157*) |
| 24 | 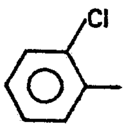 | H | 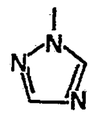 | 2 | tert.-Butyl | 126 |
| 25 | 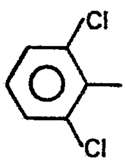 | H | 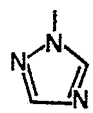 | 0 | tert.-Butyl | 110–112 |
| 26 | 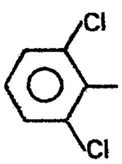 | H | 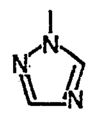 | 1 | tert.-Butyl | 115–116*) |
| 27 | 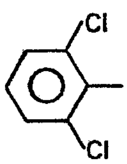 | H | 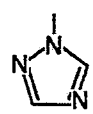 | 2 | tert.-Butyl | 164–165 |
| 28 | 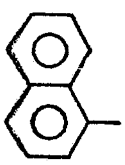 | H | 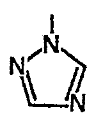 | 0 | tert.-Butyl | 112–115 |
| 29 | 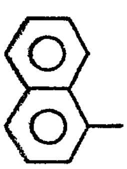 | H | 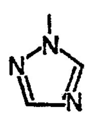 | 1 | tert.-Butyl | 122–127*) |
| 30 | 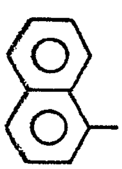 | H | 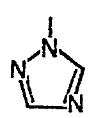 | 2 | tert.-Butyl | 180–183 |
| 31 | 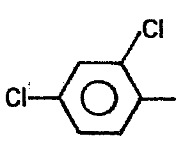 | H | 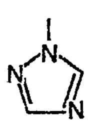 | 0 | tert.-Butyl | IR (Film): 2950, 1581, 1460, 1362, 1212, 1152, 1096, 1064, 1043, 844, 787, 657 $cm^{-1}$ |

*) Diastereomerengemisch

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 32 | 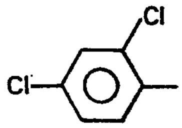 | H | 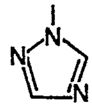 | 0 | tert.-Butyl | 95–97 |
| 33 | 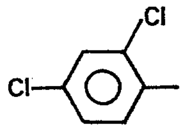 | H | 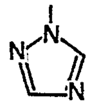 | 0 | $-CH_3$ | 66–86 |
| 34 | 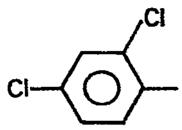 | H | 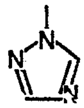 | 0 | 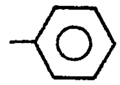 | 95–97 |
| 35 | n-Hexyl | H | 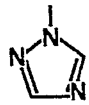 | 0 | 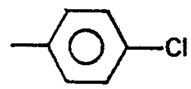 | IR(Film): 2945, 2920, 2850, 1496, 1471, 1270, 1132, 1089, 1008, 818, 674 $cm^{-1}$ |
| 36 | n-Butyl | H | 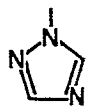 | 0 | 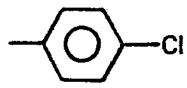 | IR(Film): 2950, 2920, 1496, 1472, 1270, 1132, 1089, 1008, 818, 672 $cm^{-1}$ |
| 37 | n-Butyl | H | 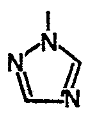 | 2 | n-Pentyl | 96–71 |
| 38 | $H_3C-$ | $H_3C-$ | 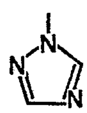 | 0 | 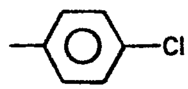 | 76–79 |
| 39 | 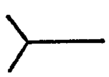 | H | 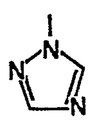 | 0 | 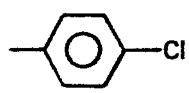 | IR(Film): 2955, 1494, 1471, 1279, 1130, 1050, 1007, 815, 673 $cm^{-1}$ |
| 40 | Ethyl | H | 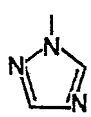 | 0 | n-Propyl | IR(Film): 2960, 2925, 1495, 1270, 1192, 1133, 1003, 817, 675 $cm^{-1}$ |

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 41 | n-Butyl | H | 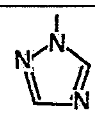 | 0 | n-Pentyl | IR(Film): 2955, 2925, 2860, 1496, 1460, 1271, 1190, 1133, 1008, 677 $cm^{-1}$ |
| 42 | n-Pentyl | H | 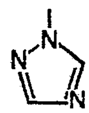 | 0 | n-Hexyl | IR(Film): 2955, 2925, 2860, 1497, 1460, 1272, 1192, 1135, 1012, 678 $cm^{-1}$ |
| 43 | H | H | 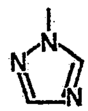 | 0 | 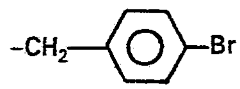 | 46–49 |
| 44 | $H_3C$– | H | 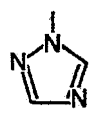 | 0 | 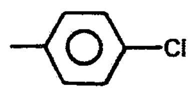 | IR(Film): 1495, 1470, 1270, 1192, 1131, 1088, 1007, 817, 666 $cm^{-1}$ |
| 45 | n-Butyl | H | 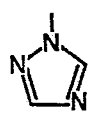 | 0 | tert.-Butyl | IR(Film): 2958, 1495, 1459, 1364, 1272, 1190, 1158, 1134, 1010, 677 $cm^{-1}$ |
| 46 | i-Butyl | H | 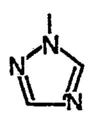 | 0 | tert.-Butyl | IR(Film): 2952, 2862, 1494, 1457, 1364, 1270, 1189, 1157, 1132, 1007, 675 $cm^{-1}$ |
| 47 | i-Butyl | H | 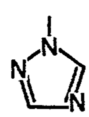 | 0 | 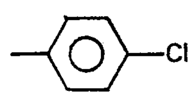 | 45–46 |
| 48 | i-Butyl | H | 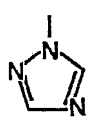 | 1 | 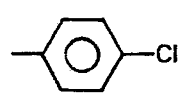 | 110–112 |
| 49 | i-Butyl | H | 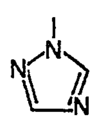 | 2 | 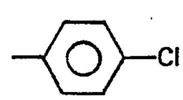 | 140–141 |

Tabelle 1 (Fortsetzung)

| Verbindung Nr. | R¹ | R² | Az (Salz) | n | R³ | Schmp. (°C) |
|---|---|---|---|---|---|---|
| 50 | 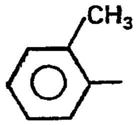 | H | 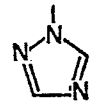 | 0 | tert.-Butyl | 98–101 |
| 51 | 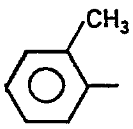 | H | 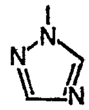 | 0 | tert.-Butyl | 93–95 |
| 52 | 3-Heptyl | H | 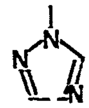 | 0 | 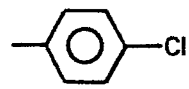 | IR(Film): 2954, 2922, 1472, 1269, 1131, 1088, 1008, 819, 673 $cm^{-1}$ |
| 53 | 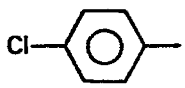 | H | 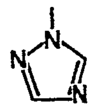 | 0 | 3-Methylbutyl | IR(Film): 2962, 1489, 1271, 1130, 1088, 1012, 676 $cm^{-1}$ |
| 54 | 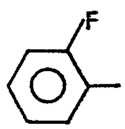 | H | 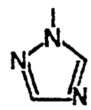 | 0 | 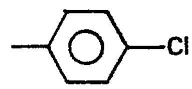 | 105–107 |
| 55 | 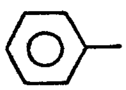 | H | 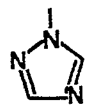 | 0 | tert.-Butyl | 106–108 |
| 56 | 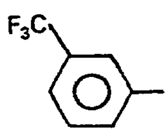 | H | 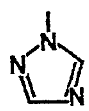 | 0 | tert.-Butyl | 40–43 |
| 57 | 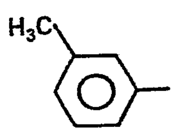 | H | 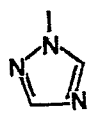 | 0 | tert.-Butyl | 85–87 |
| 58 | 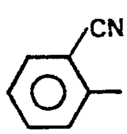 | H | 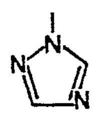 | 0 | tert.-Butyl | 110–112 |
| 59 | 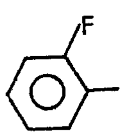 | H | 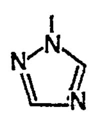 | 0 | tert.-Butyl | 94–95 |
| 60 | 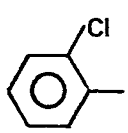 | H | 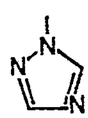 | 0 | Ethyl | 59–61 |
| 61 | 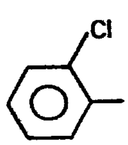 | H | 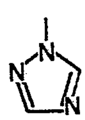 | 2 | Ethyl | 103–104 |

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 87 | 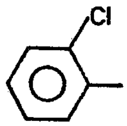 | H | 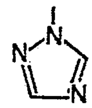 | 2 | 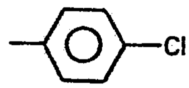 | 155–158 |
| 88 | 3-Heptyl | H | 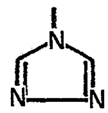 | 0 | 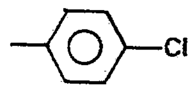 | IR(Film): 2956, 2922, 1472, 1468, 1168, 1090, 1009, 817, 647 $cm^{-1}$ |
| 89 | 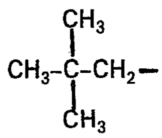 | H | 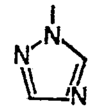 | 0 | 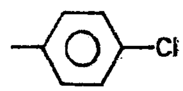 | 83–86 |

Die Verbindungen können praktisch alle Entwicklungsstadien einer Pflanze verschiedenartig beeinflussen. Sie werden deshalb als Pflanzenwachstumsregulatoren verwendet.

Die Wirkungsvielfalt der Pflanzenwachstumsregulatoren hängt ab vor allem

a) von der Pflanzenart und -sorte,

b) von dem Zeitpunkt der Applikation, bezogen auf das Entwicklungsstadium der Pflanzen und auf die Jahreszeit,

c) von dem Applikationsort und -verfahren (Samenbeize, Bodenbehandlung oder Blattapplikation),

d) von den geoklimatischen Faktoren (Temperatur, Niederschlag),

e) von der Bodenbeschaffenheit (einschliesslich Düngung)

f) von der Formulierung bzw. Anwendungsform des Wirkstoffes und schliesslich

g) von den angewendeten Konzentrationen der aktiven Substanz.

Von den verschiedenartigen Anwendungsmöglichkeiten der Pflanzenwachstumsregulatoren in der Landwirtschaft und im Gartenbau werden einige nachstehend erwähnt.

A. Mit den erfindungsgemäss verwendbaren Verbindungen lässt sich das vegetative Wachstum der Pflanzen stark hemmen, was sich insbesondere in einer Reduzierung des Längenwachstums äussert. Die behandelten Pflanzen weisen demgemäss einen gedrungenen Habitus auf; ausserdem ist eine dunklere Blattfärbung zu beobachten.

Mit Wachstumshemmern lässt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generative Phase neigen. Es ist vorteilhaft, wenn die Bestände durch Behandlung mit den Verbindungen, aber nicht zu üppig in den Winter hineingehen. Dadurch kann der erhöhten Frostempfindlichkeit und – wegen der relativ geringen Blatt- bzw. Pflanzenmasse – dem Befall mit verschiedenen Krankheiten (z.B. Pilzkrankheit) vorgebeugt werden. Die Hemmung des vegetativen Wachstums ermöglicht ausserdem bei vielen Kulturpflanzen eine dichtere Bepflanzung des Bodens, so dass ein Mehrertrag bezogen auf die Bodenfläche erzielt werden kann.

Mit den erfindungsgemäss verwendbaren Wirkstoffen lassen sich Mehrerträge sowohl an Pflanzenteilen als auch an Pflanzeninhaltsstoffen erzielen. So ist es beispielsweise möglich, höhere Produktionen an Knospen, Blüten, Blättern, Früchten, Samenkörnern, Wurzeln und Knollen zu induzieren.

Dabei können die Stoffe Ertragssteigerungen durch Eingriffe in den pflanzlichen Stoffwechsel bzw. durch Hemmung des generativen Wachstums hervorrufen.

C. Mit Pflanzenwachstumsregulatoren lassen sich schliesslich sowohl eine Verkürzung bzw. Verlängerung der Wachstumsstadien als auch eine Beschleunigung bzw. Verzögerung der Reife der geernteten Pflanzenteile vor oder nach der Ernte erreichen.

Die Verbindungen können den Kulturpflanzen sowohl durch den Samen (als Saatgutbeizmittel), als auch über den Boden, d.h. durch die Wurzel sowie durch Spritzung über das Blatt zugeführt werden. Infolge der hohen Pflanzenverträglichkeit kann die Aufwandmenge stark variiert werden.

Bei der Saatgutbehandlung werden im allgemeinen Wirkstoffmengen von 0,001 bis 50 g je Kilogramm Saatgut, vorzugsweise 0,01 bis 10 g benötigt.

Für die Blatt- und Bodenbehandlung sind im allgemeinen Gaben von 0,01 bis 12 kg/ha bevorzugt 0,1 bis 3 kg/ha als ausreichend zu betrachten.

Die Anwendung der Wirkstoffe erfolgt z.B. in Form von direkt versprühbaren Lösungen, Pulvern, Suspensionen, auch hochprozentige wässrige, ölige oder sonstige Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Alkohole (z.B. Methanol, Butanol), Amine (z.B. Äthanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyäthylen-Fettalkohol-Ether, Alkylsulfonate und Arylsulfonate) und Dispergiermittel, wie Lignin, Sulfitablaugen und Methylcellulose in Frage.

Die Formulierungen enthalten im allgemeinen zwischen 0,01 und 95 Gew.% Wirkstoff, vorzugsweise zwischen 0,5 und 90%.

Um die biologische Wirkung der erfindungsgemässen Mittel festzustellen, wurden im Gewächshaus mehrere Versuche nach dem Neubauersystem durchgeführt. Dabei wurden die Testpflanzen unter Verwendung von Torfkultursubstrat, welches ausreichend mit Nährstoffen versorgt war, in Kunststoffgefässe mit einem Durchmesser von 12,5 cm eingesät. Die Applikation der Wirkstoffe erfolgte in unterschiedlichen Aufwandmengen auf den Boden oder auf die Blätter. Bei der Bodenbehandlung wurden die Wirkstoffe am Tage der Einsaat auf die Bodenoberfläche gespritzt, die Blattbehandlung erfolgte bei einer Wuchshöhe der Pflanzen von ca. 8 cm in üblicher Weise durch Spritzen. Während der Wachstumszeit von 18 Tagen zeigten die mit den Wirkstoffen behandelten Pflanzen gegenüber der unbehandelten Kontrolle ein deutlich geringeres Längenwachstum, was durch die abschliessenden Längenmessungen bestätigt werden konnte. Hierbei wurden von jeder Behandlungsreihe 100 Pflanzen gemessen.

Die in der Wirkungsweise vergleichbare bekannte Vergleichssubstanz 2-Chloräthyl-trimethyl-ammoniumchlorid (Chlorcholinchlorid-CCC) wurde in ihrer Wirkung von den Mitteln gemäss der Erfindung übertroffen (Ergebnisse s. Tabelle 2 und 3).

Tab. 2 Beeinflussung des Längenwachstums von Raps
Bodenbehandlung

| Wirkstoff Nr | Aufwand-menge kg/ha | Pflanzenhöhe cm | relativ |
|---|---|---|---|
| Kontrolle (unbehandelt) | – | 10,8 | 100 |
| CCC | 3,0 | 11,0 | 101,9 |
| | 12,0 | 10,8 | 100 |
| 32 | 3,0 | 9,5 | 88,0 |
| | 12,0 | 7,5 | 69,4 |
| 45 | 3,0 | 8,2 | 75,9 |
| | 12,0 | 6,0 | 55,6 |
| 46 | 3,0 | 9,5 | 88,0 |
| | 12,0 | 7,0 | 64,8 |
| 50 | 3,0 | 9,2 | 85,2 |
| | 12,0 | 6,3 | 58,3 |
| 55 | 3,0 | 9,5 | 88,0 |
| | 12,0 | 8,0 | 74,1 |
| 57 | 3,0 | 9,5 | 88,0 |
| | 12,0 | 7,0 | 64,8 |
| 58 | 3,0 | 9,0 | 83,3 |
| | 12,0 | 7,5 | 69,4 |
| 59 | 3,0 | 9,0 | 83,3 |
| | 12,0 | 5,8 | 53,7 |

Tab. 3 Beeinflussung des Längenwachstums von Raps
Blattbehandlung

| Wirkstoff Nr. | Aufwand-menge kg/ha | Pflanzenhöhe cm | relativ |
|---|---|---|---|
| Kontrolle (unbehandelt) | – | 18,2 | 100 |
| CCC | 3,0 | 17,0 | 93,4 |
| | 12,0 | 16,0 | 87,9 |
| 22 | 3,0 | 15,5 | 85,2 |
| | 12,0 | 13,0 | 71,4 |
| 32 | 3,0 | 14,0 | 77,0 |
| | 12,0 | 12,4 | 68,1 |
| 10 | 3,0 | 15,8 | 86,8 |
| | 12,0 | 12,7 | 69,8 |
| 42 | 3,0 | 15,5 | 85,2 |
| | 12,0 | 12,9 | 70,9 |
| 41 | 3,0 | 15,0 | 82,4 |
| | 12,0 | 12,6 | 69,2 |
| 50 | 3,0 | 15,0 | 82,4 |
| | 12,0 | 12,6 | 69,2 |
| 63 | 3,0 | 16,0 | 87,9 |
| | 12,0 | 14,2 | 78,0 |

**Patentansprüche**

für folgende Vertragsstaaten: BE, CH, DE, FR, GB, LU, NL, SE

Fassung für folgende Vertragsstaaten: AT + JT
Mittel und Verfahren zur Regulierung des Pflanzenwachstums

Die vorliegende Erfindung betrifft Mittel zur Regulierung des Pflanzenwachstums, die α-Azolylsulfide und deren Derivate, α-Azolylsulfoxide und α-Azolylsulfone oder deren Salze oder Metallkomplexe enthalten, sowie die Verwendung dieser Verbindungen zur Regulierung des Pflanzenwachstums.

Es ist bekannt, schwefelhaltige Triazolderivate als Herbizid zu verwenden (US-Patentschrift 3824312). Im Gegensatz dazu betrifft die vorliegende Erfindung Mittel zur Regulierung des Pflanzenwachstums.

Es ist ferner bekannt, β-Triazolylthioätherderivate als Wachstumsregulatoren zu verwenden (DE-OS 2645496). Im Gegensatz dazu betrifft die vorliegende Erfindung die Verwendung von α-Azolylthioätherderivaten als Wachstumsregulatoren.

Die EP-OS 0000752 gilt gegenüber der vorliegenden Erfindung nicht als ältere Anmeldung.

Es ist ferner bekannt, stickstoffhaltige Verbindungen wie Chlorcholinchlorid (CCC) (J. Biol. Chem. 235, 475 (1960)) zur Regulierung des Pflanzenwachstums zu verwenden.

Pflanzenwachstumsregulatoren können z.B. eine Reduzierung des Längenwachstums oder einen Keim-, Knospen- oder Blütenaustrieb zu einem Zeitpunkt auslösen, an dem die Nutzpflanzen normalerweise hierzu keine Bereitschaft zeigen.

Ferner können solche Wirkstoffe die Frostresistenz erhöhen, die Ausbildung von Seitentrieben fördern oder hemmen oder ein Entblättern bzw. einen Fruchtfall verursachen, wodurch z.B. eine Ernteerleichterung ermöglicht wird. Von grossem wirtschaftlichem Interesse ist besonders die Verhinderung des «Lagerns» von Getreidepflanzen vor der Ernte durch Wachstumsregulatoren.

Bei der Anwendung des bekannten Chlorcholinchlorids als Mittel zur Regulierung des Pflanzenwachstums z.B. an Getreidearten, bei der ein gedrungener Wuchs zur Unterbindung des Lagerns erreicht werden soll, ist die Wirkung oft nicht ausreichend.

Es wurde nun gefunden, dass Mittel zur Regulierung des Pflanzenwachstums, die α-Azolylsulfide und deren Derivate der Formel

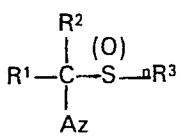 (I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl
und
n 0, 1 oder 2 bedeuten oder deren Salze oder Metallkomplexe
enthalten, eine sehr gute pflanzenwachstumsregulierende Wirksamkeit und hervorragende Pflanzenverträglichkeiten zeigen.

$R^1$ bedeutet beispielsweise Wasserstoff, Methyl, Ethyl, n-Propyl, Isopropyl, n-Butyl, n-Pentyl, n-Hexyl, Methoxycarbonyl, Phenyl, 4-Nitrophenyl, 4-Bromphenyl, 4-Cyanphenyl, 2-Methylphenyl, 4-t-Butylphenyl, 3-Trifluormethylphenyl, 4-Trifluormethylphenyl, 4-Fluorphenyl, 2-Chlorphenyl, 4-Chlorphenyl, 4-Bromphenyl, 2,4-Dichlorphenyl, 2,6-Dichlorphenyl, 3,4-Dichlorphenyl, α-Naphthyl.

$R^2$ bedeutet beispielsweise Wasserstoff, Methyl, n-Propyl.

$R^3$ bedeutet beispielsweise Methyl, Ethyl, n-Propyl, Isopropyl, n-Butyl, t-Butyl, n-Pentyl, n-Hexyl, Allyl, Propargyl, Phenyl, 4-Methoxyphenyl, 4-Tolyl, 4-Chlorphenyl, 3,4-Dichlorphenyl, 2,4-Dichlorphenyl, 2,3,6-Trichlorphenyl, Benzyl, 3-Trifluormethylbenzyl, 4-Chlorbenzyl, 4-Brombenzyl, 3,4-Dichlorbenzyl, 2,4-Dichlorbenzyl, 2,3,6-Trichlorbenzyl, 2-Phenylethyl.

Salze sind beispielsweise die Hydrochloride, Bromide, Sulfate, Nitrate, Phosphate, Oxalate ode Dodecylbenzolsulfonate. Die Wirksamkeit der Salze geht auf das Kation zurück, so dass die Wahl des Anions beliebig ist.

Metallkomplexe sind Verbindungen der Formel

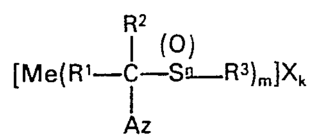 (II)

in der
$R^1$, $R^2$, $R^3$, Az und n die oben angegebene Bedeutung haben und
Me ein Metall, z.B. Kupfer, Zink, Zinn, Mangan, Eisen, Cobalt oder Nickel bedeutet
X das Anion einer anorganischen Säure bedeutet, z.B. Salzsäure, Schwefelsäure, Phosphorsäure, Bromwasserstoffsäure,
m und k 1, 2, 3 oder 4 bedeuten.

Weiterhin wurde gefunden, dass man α-Azolylsulfide der Formel I (mit n = 0) erhält, wenn man α-Chlorsulfide der Formel

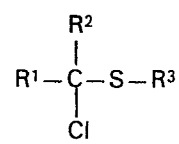 (III)

in welcher
$R^1$, $R^2$ und $R^3$ die oben angegebenen Bedeutungen haben, mit den Azolen H–Az, in denen Az die oben angegebene Bedeutung hat, gegebenenfalls in Gegenwart einer Base und gegebenenfalls in Gegenwart eines Verdünnungsmittels umsetzt. Durch Oxidation der so erhaltenen α-Azolylsulfi-

de der Formel I (n = 0) erhält man die α-Azolylsulfoxide der Formel I (n = 1) und die α-Azolylsulfone der Formel I (n = 2).

Zur Herstellung der α-Azolylsulfide der Formel I (n = 0) ist es zweckmässig, die α-Chlorsulfide der Formel III ohne Verdünnungsmittel oder in Gegenwart eines Verdünnungsmittels mit etwa 0,5 bis 2 Äquivalenten eines Alkalisalzes des jeweiligen Azols oder mit etwa 0,5 bis 4 Äquivalenten des jeweiligen Azols, gegebenenfalls unter Zusatz von 0,5 bis 4 Äquivalenten einer Base bei Temperaturen von etwa 0 bis 200 °C, vorzugsweise +20 °C bis +160 °C in homogener oder inhomogener Phase umzusetzen.

Als Verdünnungsmittel können z.B. Methanol, Äthanol, Isopropanol, n-Butanol, Diäthyläther, Tetrahydrofuran, Dioxan, Aceton, Acetonitril, Dimethylformamid, Dimethylsulfoxid, Chloroform, Methylenchlorid oder Toluol verwendet werden. Als Basen können z.B. organische Amine wie Triäthylamin, Pyridin oder anorganische Verbindungen, z.B. Kaliumcarbonat oder Natriumhydroxid verwendet werden.

Die als Ausgangsstoffe verwendeten α-Chlorsulfide III sind z.T. aus der Literatur bekannt oder können nach literaturbekannten Verfahren hergestellt werden, z.B.

a) durch Chlorierung von Sulfiden mit N-Chlorsuccinimid (siehe z.B. B.L. Tuleen und T.B. Stephens, J. Org. Chem. 34, 31 (1969)) nach dem Schema

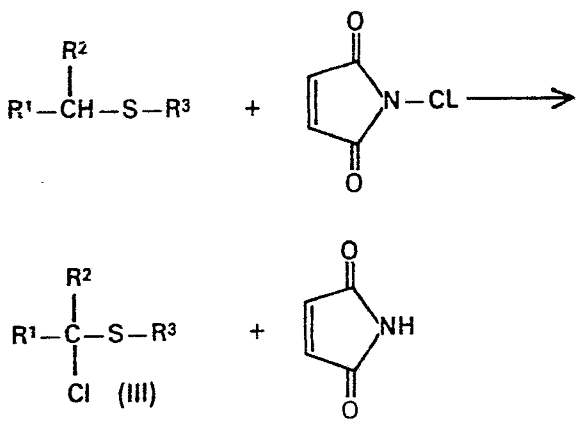

(III)

oder

b) durch Umsetzung von Aldehyden mit Thiolen in Gegenwart von Chlorwasserstoff (siehe z.B. H. Böhme, H. Fischer und R. Frank, Liebigs Ann. Chem. 563, 54 (1949)) nach dem Schema

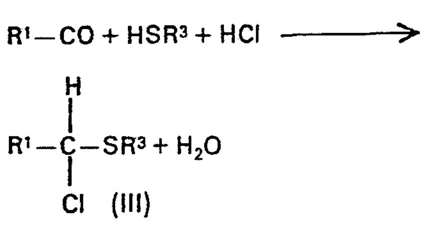

(III)

Zur Herstellung der α-Azolylsulfoxide der Formel I (n = 1) setzt man die α-Azolylsulfide gegebenenfalls in Gegenwart eines Verdünnungsmittels mit etwa einem Äquivalent eines geeigneten Oxidationsmittels bei Temperaturen zwischen etwa -30 und +100 °C um. Die α-Azolylsulfone (Formel I, n = 2) erhält man in ähnlicher Weise bei der Oxidation der α-Azolylsulfide (I, n = 0) mit mindestens zwei Äquivalenten eines geeigneten Oxidationsmittels oder bei der Oxidation der α-Azolylsulfoxide (I, n = 1) mit mindestens einem Äquivalent eines Oxidationsmittels.

Als Oxidationsmittel können beispielsweise Kaliumpermanganat, Wasserstoffperoxid oder Percarbonsäuren wie Peressigsäure, Perbenzoesäure oder 3-Chlorperbenzoesäure verwendet werden. Als Verdünnungsmittel können z.B. Wasser, Essigsäure, Methanol, Aceton, Chloroform oder Methylenchlorid verwendet werden. Ein bevorzugtes Verfahren zur Herstellung der Sulfoxide (I, n = 1) ist die Umsetzung der Sulfide (I, n = 0) mit einem Äquivalent 3-Chlorperbenzoesäure in Methylenchlorid bei 0 bis 25 °C. Ein bevorzugtes Verfahren zur Herstellung der Sulfone ist die Umsetzung der Sulfide (I, n = 0) mit zwei Äquivalenten 3-Chlorperbenzoesäure in Methylenchlorid bei 15 bis 41 °C.

Die Verbindungen der Formel I (n = 0, 1, 2) sind in vielen organischen Lösungsmitteln, z.B. in Essigester, Aceton, Äthanol, Methylenchlorid, Chloroform, Dimethylsulfoxid, Dimethylformamid und N-Methylpyrrolidon leicht lösliche Substanzen. Die α-Azolylsulfide (I, n = 0) sind darüber hinaus auch in Toluol gut löslich.

Sie lassen sich mit Säuren in ihre Salze, z.B. Hydrochloride, Sulfate, Nitrate, Oxalate, Formiate, Acetate oder Dodecylbenzylsulfonate überführen.

Ferner wurde gefunden, dass man die Metall-Komplexe der Formel II erhält, wenn man α-Azolylsulfide bzw. deren Derivate der Formel I mit Metallsalzen der Formel

$$MeX_k \cdot a\,H_2O \qquad (IV)$$

in welcher

Me, X und k die oben angegebene Bedeutung haben und a 0, 1, 2, 3 oder 4 bedeutet, in Gegenwart eines Lösungsmittels umsetzt. Hier steht Me vorzugsweise für Metalle der I., II. und IV. bis VIII. Nebengruppe des Periodensystems der Elemente sowie für Metalle der II. und IV. Hauptgruppe, insbesondere für Kupfer, Zink, Zinn, Mangan, Eisen, Cobalt oder Nickel.

Die Metallsalze der Formel IV sind allgemein bekannte, leicht zugängliche Verbindungen.

Für die Herstellung der Metall-Komplexe der Formel II kommen alle mit Wasser mischbaren Lösungsmittel in Frage. Hierzu gehören vorzugsweise Methanol, Äthanol, Isopropanol, Aceton, Tetrahydrofuran und Dioxan. Dabei arbeitet man im allgemeinen bei Temperaturen zwischen 0 und 100 °C, vorzugsweise zwischen 10 und 35 °C.

Die Sulfide (I, n = 0) und Sulfone (I, n = 2) enthalten jeweils ein asymmetrisches Kohlenstoffatom und fallen demgemäss als Enantiomerengemische an, die in die optisch aktiven Verbindungen getrennt werden können. Im Falle der Sulfoxide I (n = 1) treten durch das dem asymmetrischen Kohlenstoff benachbarte asymmetrische Schwefelatom Diastereomerengemische auf, die in üblicher Weise, z.B. durch Kristallisation oder Chromatographie in die einzelnen Komponenten getrennt werden können. Für die Anwendung als Mittel zur Regulierung des Pfanzenwachstums ist jedoch eine Trennung der Enantiomeren oder Diastereomeren normalerweise nicht erforderlich.

Beispiel 1

tert.-Butyl-[(2,4-dichlorphenyl)-1,2,4-triazol-1-yl-methyl]-sulfid

Zur Lösung von 22,1 g 1,2,4-Triazol in 500 ml wasserfreiem Aceton gibt man 60,5 g tert.-Butyl-[(2,4-dichlorphenyl)-chlormethyl]-sulfid. Nach Zugabe von 44,2 g feingepulvertem Kaliumcarbonat erhitzt man die Mischung unter Rühren sieben Stunden am Rückfluss. Danach filtriert man die unlöslichen Bestandteile ab, engt das Filtrat im Vakuum zur Trockene ein und versetzt den Rückstand mit 300 ml Wasser. Man extrahiert die wässrige Phase 3mal mit je 200 ml Methylenchlorid, wäscht die vereinigten Extrakte mit 200 ml Wasser, trocknet sie und engt im Vakuum ein. Nach Zugabe von 100 ml Diisopropyläther gewinnt man aus dem Rückstand 35,6 g (53%) farblose Kristalle vom Schmp. 95 bis 97°C (Verbindung Nr. 32).

$^1$H-NMR (100 MHz, $CDCl_3$): δ = 1,3 (s, 9H), 6,95 (s, 1H), 7,0–7,4 (m, 3H, ABX), 8,0 (s, 1H), 8,8 ppm (s, 1H).

Beispiel 2

Bis-[tert.-butyl-[(2,4-dichlorphenyl)-1,2,4-triazol-1-yl-methyl]-sulfid]-kupfer-(II)-chlorid

Zur Lösung von 9,5 g tert.-Butyl-[(2,4-dichlorphenyl)-1,2,4-triazol-1-yl-methyl]-sulfid in 100 ml Äthanol tropft man 15 ml einer molaren äthanolischen Lösung von Kupfer-(II)-chlorid-dihydrat. Aus dieser tiefblauen Lösung isoliert man nach zweitägigem Stehen bei 0°C 9,8 g blaue Kristalle, die mit Äthanol und Äther gewaschen werden. Schmp. 130°C.

Beispiel 3

1-Pentyl-[1-(1,2,4-triazol-1-yl)-pentyl-(1)]-sulfid

Zur Suspension von 13,0 g Natriumhydrid in 100 ml Dimethylformamid tropft man unter Rühren eine Lösung von 43,5 g Triazol in 200 ml Dimethylformamid. Nach Beendigung der Wasserstoffentwicklung tropft man zu der auf Raumtemperatur abgekühlten Mischung 97,0 g 1-Pentyl-[1-chlorpentyl-(1)]-sulfid hinzu, wobei sich das Gemisch erwärmt. Anschliessend rührt man noch acht Stunden bei 80°C. Die Reaktionsmischung wird sodann im Vakuum eingeengt, mit 500 ml Wasser versetzt und 5mal mit Methylenchlorid extrahiert. Die vereinigten und eingeengten Extrakte chromatographiert man an Kieselgel (5×70 cm) zunächst unter Verwendung von Methylenchlorid als Laufmittel. Nach Durchlauf der ersten bräunlichen Zone werden steigende Mengen Aceton zugesetzt (bis 10% Aceton). Als zweite Zone isoliert man so 15,0 g Produkt als blassgelbes Öl (Verbindung Nr. 42). IR (Film): 2947, 2922, 2855, 1495, 1460, 1270, 1190, 1132, 1008, 676 $cm^{-1}$.

$^1$H-NMR (270 MHz, $CDCl_3$): δ = 0,9 («tr», 6H), 1,3 (m, 8H), 1,5 (m, 2H), 2,1 (m, 2H), 2,4 (m, 2H), 5,4 (tr, 1H), 8,0 (s, 1H), 8,4 ppm (s, 1H).

Beispiel 4

1-Pentyl-[1-(1,2,4-triazol-1-yl)-pentyl-(1)]-sulfon

Zur Lösung von 10,0 g 85prozentiger 3-Chlorperbenzoesäure in 140 ml Methylchlorid tropft man unter Rühren und Eiskühlung eine Lösung von 6,0 g 1-Pentyl-[1-(1,2,4-triazol-1-yl)-pentyl-(1)]-sulfid. Nach Abklingen der anfänglichen Erwärmung rührt man noch 2 Tage bei 25°C. Die Mischung wird dann mit Natriumcarbonatlösung, Natriumsulfitlösung und Wasser gewaschen und die organische Phase getrocknet. Nach dem Einengen bleibt ein hellgelbes Öl, aus dem beim Anreiben mit Diisopropyläther 3,5 g farblose Kristalle vom Schmp. 69 bis 71°C gewonnen werden.

NMR ($CDCl_3$, 100 MHz): δ = 0,9 (m, 6H), 1,4 (m, 8H), 1,8 (m, 2H), 2,5 (m, 2H), 2,8 («dd», 2H), 5,4 (dd, 1H), 8,1 (s, 1H), 8,5 ppm (s. 1H).

Beispiel 5

tert.-Butyl-[(2-methylphenyl)-imidazol-1-yl-methyl]-sulfid

Zur Lösung von 43,6 g Imidazol in 300 ml Aceton tropft man unter Rühren 82 g tert.-Butyl-[(2-methylphenyl)-chlormethyl]-sulfid. Nach Zugabe von 88 g feingepulvertem Kaliumcarbonat erhitzt man 5 Stunden am Rückfluss. Danach wird von den ungelösten Bestandteilen abfiltriert und das Filtrat eingeengt. Der mit 300 ml Wasser versetzte Rückstand wird mit 3×200 ml Methylenchlorid extrahiert. Aus den vereinigten organischen Phasen bleiben nach Waschen mit Wasser, Trocknen und Einengen 69 g eines bräunlichen Öls zurück, die in 1 l Diisopropyläther gelöst werden. Durch tropfenweise Zugabe von 90 ml einer 2,85-molaren Lösung von Chlorwasserstoff in Diisopropyläther unter Rühren fallen aus dieser Lösung blassgelbe Kristalle des Hydrochlorids, die aus Aceton umkristallisiert werden, an. Man erhält so 51 g farbloses tert.-Butyl-[(2-methylphenyl)-imidazol-1-yl-methyl]-sulfidhydrochlorid vom Schmp. 168 bis 170°C (Verbindung Nr. 73).

Nach Übergiessen des Hydrochlorids mit einer wässrigen Lösung von 25 g Natriumhydrogencarbonat extrahiert man die freie Base mit 3×200 ml Äther. Nach dem Trocknen und Einengen fällt sie als blassgelbes Öl (27 g) an. IR (Film): 3105, 2951, 1462, 1225, 1077, 904, 846, 751, 744, 665, 660 $cm^{-1}$. $^1$H-NMR (60 MHz, $CDCl_3$): δ = 1,3 (s, 9H), 2,4 (s, 3H), 6,25 (s, 1H), 6,7–7,1 (m, 6H), 7,65 ppm (dd, 1H).

Entsprechend werden die in der Tabelle 1 aufgeführten Verbindungen hergestellt.

Tabelle 1

| Verbindung Nr.*) | $R^1$ | $R^2$ | Az (Salz) | n | $R^3$ | Schmp. (°C) |
|---|---|---|---|---|---|---|
| 1 | 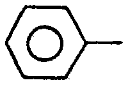 | H | 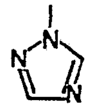 | 0 | 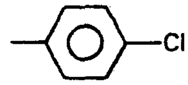 | 100–103 |
| 2 | 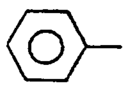 | H | 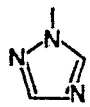 | 0 | 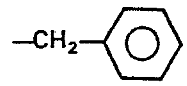 | IR(Film): 3060, 3020, 1492, 1450, 1271, 1190, 1131, 1008, 695, 677, 658 $cm^{-1}$. |
| 3 | 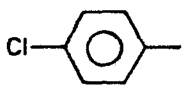 | H | 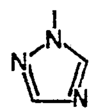 | 0 | 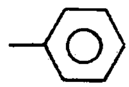 | 98 |
| 4 | 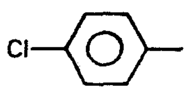 | H | 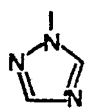 | 0 | 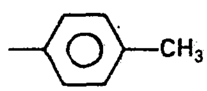 | 130 |
| 5 | 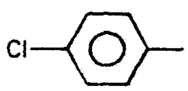 | H | 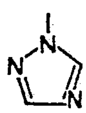 | 0 | 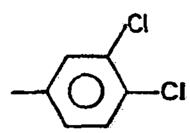 | 102 |
| 6 | 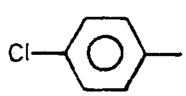 | H | 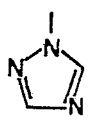 | 0 | 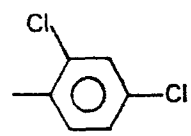 | 135–137 |
| 7 | 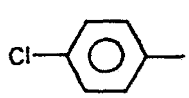 | H | 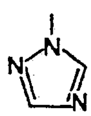 | 0 | 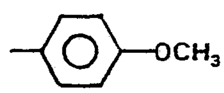 | 116 |
| 8 | 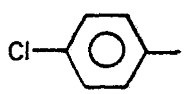 | H | 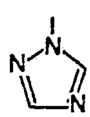 | 0 | 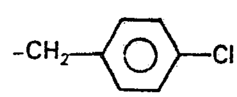 | 57–58 |
| 9 | 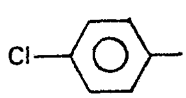 | H | 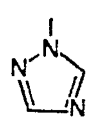 | 0 | Äthyl | IR(Film): 2965, 2925, 1490, 1271, 1131, 1088, 1010, 675 cm |

*) DieStrukturen aller aufgeführten Verbindungen wurden durch $^1$H-NMR-Spektren bestätigt.

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 10 | 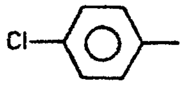 | H | 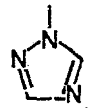 | 0 | n-Butyl | IR(Film): 2945, 2920, 1486, 1268, 1127, 1084, 1007, 671 cm |
| 11 | 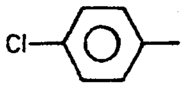 | H | 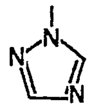 | 0 | tert.-Butyl | 95 |
| 12 | 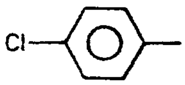 | H | 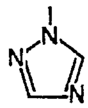 | 1 | tert.-Butyl | 125–128*) |
| 13 | 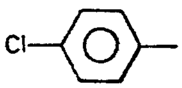 | H | 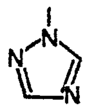 | 2 | tert.-Butyl | 150 |
| 14 | 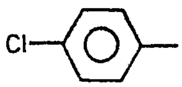 | H | 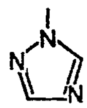 | 0 | Allyl | IR(Film): 3054, 1489, 1403, 1270, 1130, 1087, 1007, 672 $cm^{-1}$ |
| 15 | 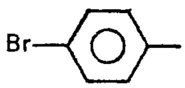 | H | 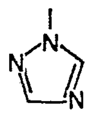 | 0 | tert.-Butyl | 77–78 |
| 16 | 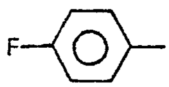 | H | 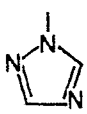 | 0 | tert.-Butyl | 102–104 |
| 17 | 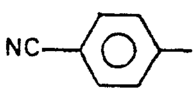 | H | 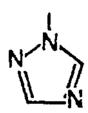 | 0 | tert.-Butyl | 73–75 |
| 18 | 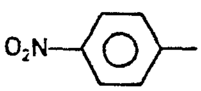 | H | 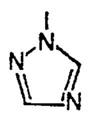 | 0 | tert.-Butyl | 76–78 |
| 19 | 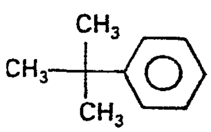 | H | 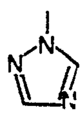 | 0 | tert.-Butyl | 94 |
| 20 | H | H | 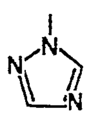 | 0 | 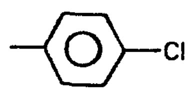 | 47–49 |
| 21 | 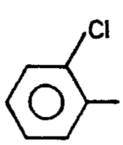 | H | 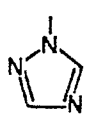 | 0 | 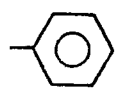 | 91 |

*) Diastereomerengemisch der Sulfoxide

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 41 | n-Butyl | H | 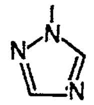 | 0 | n-Pentyl | IR(Film): 2955, 2925, 2860, 1496, 1460, 1271, 1190, 1133, 1008, 677 $cm^{-1}$ |
| 42 | n-Pentyl | H | 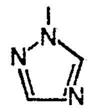 | 0 | n-Hexyl | IR(Film): 2955, 2925, 2860, 1497, 1460, 1272, 1192, 1135, 1012, 678 $cm^{-1}$ |
| 43 | H | H | 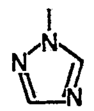 | 0 | 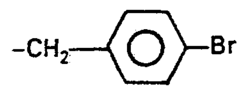 | 46–49 |
| 44 | $H_3C-$ | H | 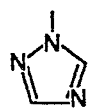 | 0 | 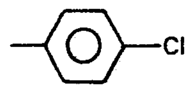 | IR(Film): 1495, 1470, 1270, 1192, 1131, 1088, 1007, 817, 666 $cm^{-1}$ |
| 45 | n-Butyl | H | 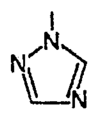 | 0 | tert.-Butyl | IR(Film): 2958, 1495, 1459, 1364, 1272, 1190, 1158, 1134, 1010, 677 $cm^{-1}$ |
| 46 | i-Butyl | H | 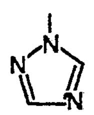 | 0 | tert.-Butyl | IR(Film): 2952, 2862, 1494, 1457, 1364, 1270, 1189, 1157, 1132, 1007, 675 $cm^{-1}$ |
| 47 | i-Butyl | H | 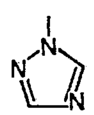 | 0 | 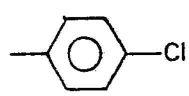 | 45–46 |
| 48 | i-Butyl | H | 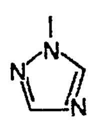 | 1 | 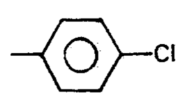 | 110–112 |
| 49 | i-Butyl | H | 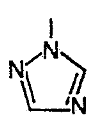 | 2 | 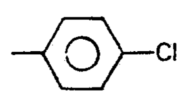 | 140–141 |

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 50 | 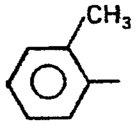 | H | 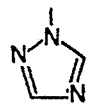 | 0 | tert.-Butyl | 98–101 |
| 51 | 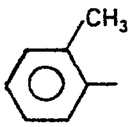 | H | 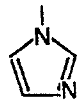 | 0 | tert.-Butyl | 93–95 |
| 52 | 3-Heptyl | H | 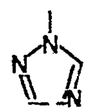 | 0 | 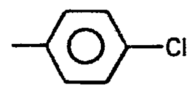 | IR(Film): 2954, 2922, 1472, 1269, 1131, 1088, 1008, 819, 673 $cm^{-1}$ |
| 53 | 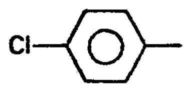 | H | 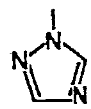 | 0 | 3-Methylbutyl | IR(Film): 2962, 1489, 1271, 1130, 1088, 1012, 676 $cm^{-1}$ |
| 54 | 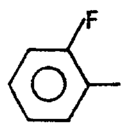 | H | 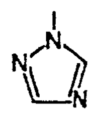 | 0 | 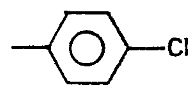 | 105–107 |
| 55 | 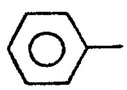 | H | 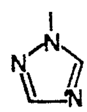 | 0 | tert.-Butyl | 106–108 |
| 56 | 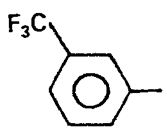 | H | 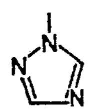 | 0 | tert.-Butyl | 40–43 |
| 57 | 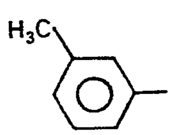 | H | 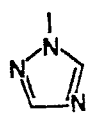 | 0 | tert.-Butyl | 85–87 |
| 58 | 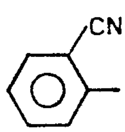 | H | 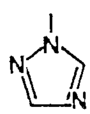 | 0 | tert.-Butyl | 110–112 |
| 59 | 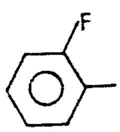 | H | 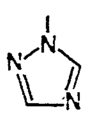 | 0 | tert.-Butyl | 94–95 |
| 60 | 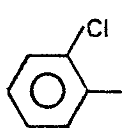 | H | 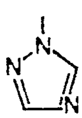 | 0 | Ethyl | 59–61 |
| 61 | 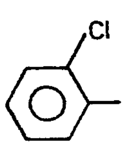 | H | 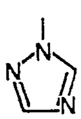 | 2 | Ethyl | 103–104 |

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 62 | 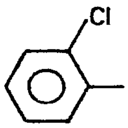 | H | 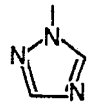 | 0 | n-Butyl | IR(Film): 2958, 2928, 1494, 1274, 1132, 1008, 748, 678 $cm^{-1}$ |
| 63 | 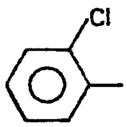 | H | 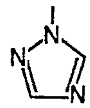 | 0 | n-Hexyl | IR(Film): 2955, 2923, 1491, 1271, 1129, 1007, 744, 675 $cm^{-1}$ |
| 64 | 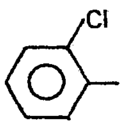 | H | 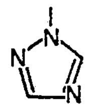 | 0 | 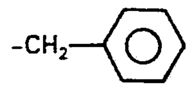 | 96–98 |
| 65 | 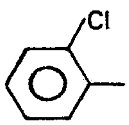 | H | 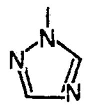 | 2 | 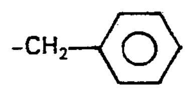 | 130–133 |
| 66 | 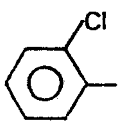 | H | 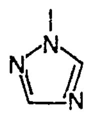 | 0 | 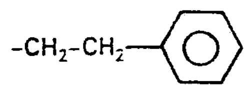 | 58–61 |
| 67 | 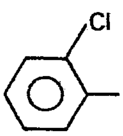 | H | 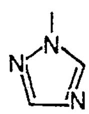 | 2 | 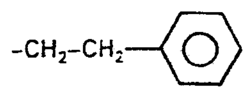 | 129–130 |
| 68 | 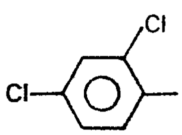 | H | 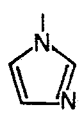 | 0 | 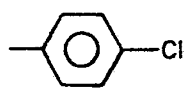 | 108–110 |
| 70 | H | H | 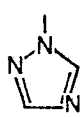 | 0 | 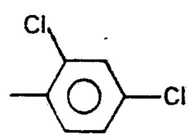 | 84–87 |
| 71 | H | H | 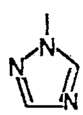 | 1 | 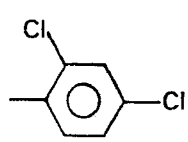 | 152–155 |
| 72 | H | H | 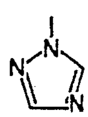 | 2 | 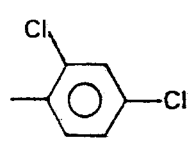 | |
| 73 | 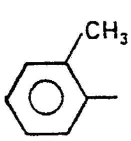 | H | 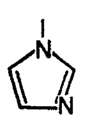 · HC1 | 0 | tert.-Butyl | 168–170 |
| 74 | 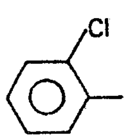 | H | 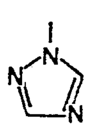 · HC1 | 0 | n-Butyl | 136–139 |

Tabelle 1 (Fortsetzung)

| Verbindung Nr. | $R^1$ | $R^2$ | Az (Salz) | n | $R^3$ | Schmp. (°C) |
|---|---|---|---|---|---|---|
| 75 | 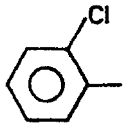 | H | 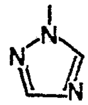 HCl | 0 | $-CH_2-CH_2-$ 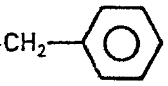 | 145–155 |
| 76 | 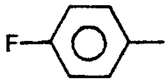 | H | 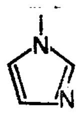 | 0 | 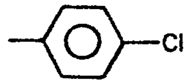 | 90–92 |
| 77 | 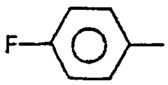 | H | 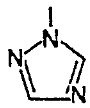 | 0 | 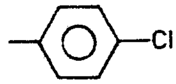 | 119–120 |
| 78 | 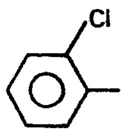 | H | 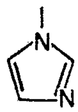 | 0 | 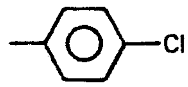 | 69–71 |
| 79 | 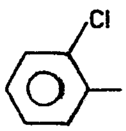 | H | 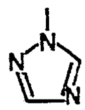 | 0 | 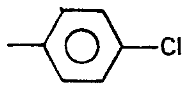 | 134–136 |
| 80 | 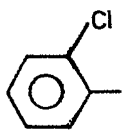 | H | 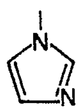 | 0 | tert.-Butyl | IR(Film): 3098, 2950, 1463, 1211, 1158, 1002, 1040, 739, 657 $cm^{-1}$ |
| 81 | 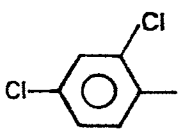 | H | 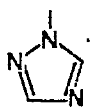 | 2 | tert.-Butyl | 94 |
| 82 | 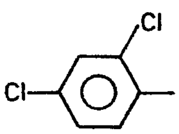 | H | 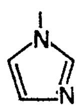 | 2 | tert.-Butyl | 153–156 |
| 83 | 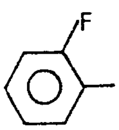 | H | 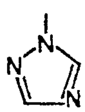 | 2 | tert.-Butyl | 143-145 |
| 84 | 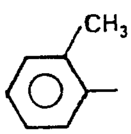 | H | 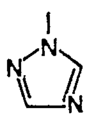 | 2 | tert.-Butyl | 160–162 |
| 86 | 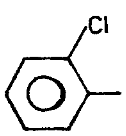 | H | 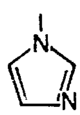 | 2 | tert.-Butyl | 113–116 |

Tabelle 1 (Fortsetzung)

| Verbindung Nr. | R¹ | R² | Az (Salz) | n | R³ | Schmp. (°C) |
|---|---|---|---|---|---|---|
| 87 | 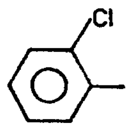 | H | 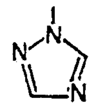 | 2 | 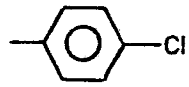 | 155-158 |
| 88 | 3-Heptyl | H | 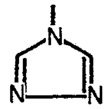 | 0 | 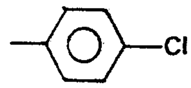 | IR(Film): 2956, 2922, 1472, 1468, 1168, 1090, 1009, 817, 647 $cm^{-1}$ |
| 89 | 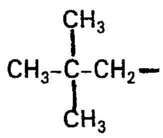 | H | 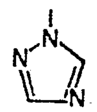 | 0 | 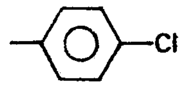 | 83-86 |

Die neuen Verbindungen können praktisch alle Entwicklungsstadien einer Pflanze verschiedenartig beeinflussen. Sie werden deshalb als Pflanzenwachstumsregulatoren verwendet.

Die Wirkungsvielfalt der Pflanzenwachstumsregulatoren hängt ab vor allem

a) von der Pflanzenart und -sorte,

b) von dem Zeitpunkt der Applikation, bezogen auf das Entwicklungsstadium der Pflanzen und auf die Jahreszeit,

c) von dem Applikationsort und -verfahren (Samenbeize, Bodenbehandlung oder Blattapplikation),

d) von den geoklimatischen Faktoren (Temperatur, Niederschlag),

e) von der Bodenbeschaffenheit (einschliesslich Düngung)

f) von der Formulierung bzw. Anwendungsform des Wirkstoffes und schliesslich

g) von den angewendeten Konzentrationen der aktiven Substanz.

Von den verschiedenartigen Anwendungsmöglichkeiten der Pflanzenwachstumsregulatoren in der Landwirtschaft und im Gartenbau werden einige nachstehend erwähnt.

A. Mit den erfindungsgemäss verwendbaren Verbindungen lässt sich das vegetative Wachstum der Pflanzen stark hemmen, was sich insbesondere in einer Reduzierung des Längenwachstums äussert. Die behandelten Pflanzen weisen demgemäss einen gedrungenen Habitus auf; ausserdem ist eine dunklere Blattfärbung zu beobachten.

Als vorteilhaft für die Praxis erweist sich z.B. die Verringerung des Grasbewuchses an Strassenrändern, Kanalböschungen und auf Rasenflächen wie Park-, Sport- und Obstanlagen, Zierrasen und Flugplätzen, so dass die arbeits- und kostenaufwendige Schnittarbeit reduziert werden kann.

Von wirtschaftlichem Interesse ist auch die Erhöhung der Standfestigkeit von lageranfälligen Kulturen wie Getreide, Mais und Soja. Die dabei verursachte Halmverkürzung und Halmverstärkung verringern oder beseitigen die Gefahr des «Lagerns» (des Umknickens) von Pflanzen unter ungünstigen Witterungsbedingungen vor der Ernte.

Wichtig ist auch die Anwendung von Wachstumsregulatoren zur Hemmung des Längenwachstums und zur zeitlichen Veränderung der Reife bei Baumwolle.

Damit wird ein vollständig mechanisiertes Ernten dieser wichtigen Kulturpflanzen ermöglicht.

Durch Anwendung von Wachstumsregulatoren kann auch die seitliche Verzweigung der Pflanzen vermehrt oder gehemmt werden. Daran besteht Interesse, wenn z.B. bei Tabakpflanzen die Ausbildung von Seitentrieben (Geiztrieben) zugunsten des Blattwachstums gehemmt werden soll.

Mit Wachstumshemmern lässt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generative Phase neigen. Auch bei anderen Kulturen, z.B. Wintergetreide ist es vorteilhaft, wenn die Bestände durch Behandlung mit erfindungsgemässen Verbindungen im Herbst zwar gut bestockt werden, aber nicht zu üppig in den Winter hineingehen. Dadurch kann der erhöhten Frostempfindlichkeit und – wegen der relativ geringen Blatt- bzw. Pflanzenmasse – dem Befall mit verschiedenen Krankheiten (z.B. Pilzkrankheit) vorgebeugt werden. Die Hemmung des vegetativen

Wachstums ermöglicht ausserdem bei vielen Kulturpflanzen eine dichtere Bepflanzung des Bodens, so dass ein Mehrertrag bezogen auf die Bodenfläche erzielt werden kann.

B. Mit den erfindungsgemäss verwendbaren Wirkstoffen lassen sich Mehrerträge sowohl an Pflanzenteilen als auch an Pflanzeninhaltsstoffen erzielen. So ist es beispielsweise möglich, höhere Produktionen an Knospen, Blüten, Blättern, Früchten, Samenkörnern, Wurzeln und Knollen zu induzieren, den Gehalt an Zucker in Zuckerrüben, Zuckerohr, sowie Zitrusfrüchten zu erhöhen, den Proteingehalt in Getreide oder Soja zu steigern oder Gummibäume zu vermehrtem Latexfluss zu stimulieren.

Dabei können die erfindungsgemässen Stoffe Ertragssteigerungen durch Eingriffe in den pflanzlichen Stoffwechsel bzw. durch Förderung oder Hemmung des vegetativen und/oder des generativen Wachstums hervorrufen.

C. Mit Pflanzenwachstumsregulatoren lassen sich schliesslich sowohl eine Verkürzung bzw. Verlängerung der Wachstumsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die eine chemische, zeitlich konzentrierte Lockerung der Haftfestigkeit der Stiele an den Zweigen (Abszission) von Zitrusfrüchten, von Oliven oder von anderen Arten und Sorten von Kern-, Stein- und Schalenobst ermöglichen kann. Der selbe Mechanismus, das heisst die Förderung der Ausbildung von Trenngewebe zwischen Frucht- bzw. Blatt- und Sprossteil der Pflanze ist auch für ein chemisch induziertes, gut kontrollierbares Entblättern der Pflanzen verantwortlich.

Die Wirkung der erfindungsgemässen Verbindungen ist besser als bei bekannten Wachstumsregulatoren. Die Wirkung zeigt sich sowohl bei Monokotylen, z.B. Getreide wie Weizen, Gerste, Roggen, Hafer und Reis oder Mais als auch bei Dikotylen (z.B. Sonnenblumen, Tomaten, Soja, Reben, Baumwolle und vor allem Raps) und verschiedenen Zierpflanzen wie Chrysanthemen, Poinsettien und Hibiskus.

Die erfindungsgemässen Verbindungen können den Kulturpflanzen sowohl durch den Samen (als Saatgutbeizmittel), als auch über den Boden, d.h. durch die Wurzel sowie durch Spritzung über das Blatt zugeführt werden. Infolge der hohen Pflanzenverträglichkeit kann die Aufwandmenge stark variiert werden.

Bei der Saatgutbehandlung werden im allgemeinen Wirkstoffmengen von 0,001 bis 50 g je Kilogramm Saatgut, vorzugsweise 0,01 bis 10 g benötigt.

Für die Blatt- und Bodenbehandlung sind im allgemeinen Gaben von 0,01 bis 12 kg/ha bevorzugt 0,1 bis 3 kg/ha als ausreichend zu betrachten.

Die Anwendung der Wirkstoffe erfolgt z.B. in Form von direkt versprühbaren Lösungen, Pulvern, Suspensionen, auch hochprozentige wässrige, ölige oder sonstige Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Alkohole (z.B. Methanol, Butanol), Amine (z.B. Äthanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyäthylen-Fettalkohol-Ether, Alkylsulfonate und Arylsulfonate) und Dispergiermittel, wie Lignin, Sulfitablaugen und Methylcellulose in Frage.

Die Formulierungen enthalten im allgemeinen zwischen 0,01 und 95 Gew.% Wirkstoff, vorzugsweise zwischen 0,5 und 90%.

Um die biologische Wirkung der erfindungsgemässen Mittel festzustellen, wurden im Gewächshaus mehrere Versuche nach dem Neubauersystem durchgeführt. Dabei wurden die Testpflanzen unter Verwendung von Torfkultursubstrat, welches ausreichend mit Nährstoffen versorgt war, in Kunststoffgefässe mit einem Durchmesser von 12,5 cm eingesät. Die Applikation der Wirkstoffe erfolgte in unterschiedlichen Aufwandmengen auf den Boden oder auf die Blätter. Bei der Bodenbehandlung wurden die Wirkstoffe am Tage der Einsaat auf die Bodenoberfläche gespritzt, die Blattbehandlung erfolgte bei einer Wuchshöhe der Pflanzen von ca. 8 cm in üblicher Weise durch Spritzen. Während der Wachstumszeit von 18 Tagen zeigten die mit den Wirkstoffen behandelten Pflanzen gegenüber der unbehandelten Kontrolle ein deutlich geringeres Längenwachstum, was durch die abschliessenden Längenmessungen bestätigt werden konnte. Hierbei wurden von jeder Behandlungsreihe 100 Pflanzen gemessen.

Die in der Wirkungsweise vergleichbare bekannte Vergleichssubstanz 2-Chloräthyl-trimethyl-ammoniumchlorid (Chlorcholinchlorid-CCC) wurde in ihrer Wirkung von den Mitteln gemäss der Erfindung übertroffen (Ergebnisse s. Tabelle 2 und 3).

Tab. 2 Beeinflussung des Längenwachstums von Raps
Bodenbehandlung

| Wirkstoff Nr | Aufwandmenge kg/ha | Pflanzenhöhe cm | relativ |
|---|---|---|---|
| Kontrolle (unbehandelt) | - | 10,8 | 100 |
| CCC | 3,0 | 11,0 | 101,9 |
| | 12,0 | 10,8 | 100 |
| 32 | 3,0 | 9,5 | 88,0 |
| | 12,0 | 7,5 | 69,4 |
| 45 | 3,0 | 8,2 | 75,9 |
| | 12,0 | 6,0 | 55,6 |
| 46 | 3,0 | 9,5 | 88,0 |
| | 12,0 | 7,0 | 64,8 |
| 50 | 3,0 | 9,2 | 85,2 |
| | 12,0 | 6,3 | 58,3 |
| 55 | 3,0 | 9,5 | 88,0 |
| | 12,0 | 8,0 | 74,1 |
| 57 | 3,0 | 9,5 | 88,0 |
| | 12,0 | 7,0 | 64,8 |
| 58 | 3,0 | 9,0 | 83,3 |
| | 12,0 | 7,5 | 69,4 |
| 59 | 3,0 | 9,0 | 83,3 |
| | 12,0 | 5,8 | 53,7 |

Tab. 3 Beeinflussung des Längenwachstums von Raps
Blattbehandlung

| Wirkstoff Nr. | Aufwandmenge kg/ha | Pflanzenhöhe cm | relativ |
|---|---|---|---|
| Kontrolle (unbehandelt) | - | 18,2 | 100 |
| CCC | 3,0 | 17,0 | 93,4 |
| | 12,0 | 16,0 | 87,9 |
| 22 | 3,0 | 15,5 | 85,2 |
| | 12,0 | 13,0 | 71,4 |
| 32 | 3,0 | 14,0 | 77,0 |
| | 12,0 | 12,4 | 68,1 |
| 10 | 3,0 | 15,8 | 86,8 |
| | 12,0 | 12,7 | 69,8 |
| 42 | 3,0 | 15,5 | 85,2 |
| | 12,0 | 12,9 | 70,9 |
| 41 | 3,0 | 15,0 | 82,4 |
| | 12,0 | 12,6 | 69,2 |
| 50 | 3,0 | 15,0 | 82,4 |
| | 12,0 | 12,6 | 69,2 |
| 63 | 3,0 | 16,0 | 87,9 |
| | 12,0 | 14,2 | 78,0 |

Tab. 4 Beeinflussung des Längenwachstums von Weizen
Bodenbehandlung

| Wirkstoff Nr. | Aufwandmenge kg/ha | Pflanzenhöhe cm | relativ |
|---|---|---|---|
| Kontrolle (unbehandelt) | - | 33,0 | 100 |

Tabelle 4 (Fortsetzung)

| | | | |
|---|---|---|---|
| CCC | 3,0 | 26,0 | 78,8 |
| | 12,0 | 24,0 | 72,2 |
| 45 | 3,0 | 24,0 | 72,2 |
| | 12,0 | 22,0 | 66,7 |

Tab. 5 Beeinflussung des Längenwachstums von Gerste
Bodenbehandlung

| Wirkstoff Nr. | Aufwandmenge kg/ha | Pflanzenhöhe cm | relativ |
|---|---|---|---|
| Kontrolle (unbehandelt) | - | 33,0 | 100 |
| CCC | 3,0 | 30,0 | 90,9 |
| | 12,0 | 28,0 | 84,8 |
| 46 | 3,0 | 29,0 | 87,9 |
| | 12,0 | 26,0 | 78,8 |

**Patentansprüche**

für folgende Vertragsstaaten: AT + JT

1. Mittel zur Regulierung des Pflanzenwachstums enthaltend eine Verbindung der Formel

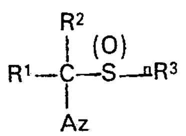

(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Mittel zur Regulierung des Pflanzenwachstums enthaltend eine Verbindung, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

3. Verfahren zur Regulierung des Pflanzenwachstums durch Behandlung der Pflanzen oder des Bodens mit einer Verbindung der in Anspruch 1 definierten Formel.

**Claims**

for the Contracting states: AT, IT

1. An agent for regulating plant growth containing a compound of the formula

logramm Saatgut, vorzugsweise 0,01 bis 10 g benötigt.

Für die Blatt- und Bodenbehandlung sind im allgemeinen Gaben von 0,01 bis 12 kg/ha bevorzugt 0,1 bis 3 kg/ha als ausreichend zu betrachten.

Die Anwendung der Wirkstoffe erfolgt z.B. in Form von direkt versprühbaren Lösungen, Pulvern, Suspensionen, auch hochprozentige wässrige, ölige oder sonstige Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Alkohole (z.B. Methanol, Butanol), Amine (z.B. Äthanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyäthylen-Fettalkohol-Ether, Alkylsulfonate und Arylsulfonate) und Dispergiermittel, wie Lignin, Sulfitablaugen und Methylcellulose in Frage.

Die Formulierungen enthalten im allgemeinen zwischen 0,01 und 95 Gew.% Wirkstoff, vorzugsweise zwischen 0,5 und 90%.

Um die biologische Wirkung der erfindungsgemässen Mittel festzustellen, wurden im Gewächshaus mehrere Versuche nach dem Neubauersystem durchgeführt. Dabei wurden die Testpflanzen unter Verwendung von Torfkultursubstrat, welches ausreichend mit Nährstoffen versorgt war, in Kunststoffgefässe mit einem Durchmesser von 12,5 cm eingesät. Die Applikation der Wirkstoffe erfolgte in unterschiedlichen Aufwandmengen auf den Boden oder auf die Blätter. Bei der Bodenbehandlung wurden die Wirkstoffe am Tage der Einsaat auf die Bodenoberfläche gespritzt, die Blattbehandlung erfolgte bei einer Wuchshöhe der Pflanzen von ca. 8 cm in üblicher Weise durch Spritzen. Während der Wachstumszeit von 18 Tagen zeigten die mit den Wirkstoffen behandelten Pflanzen gegenüber der unbehandelten Kontrolle ein deutlich geringeres Längenwachstum, was durch die abschliessenden Längenmessungen bestätigt werden konnte. Hierbei wurden von jeder Behandlungsreihe 100 Pflanzen gemessen.

Die in der Wirkungsweise vergleichbare bekannte Vergleichssubstanz 2-Chloräthyl-trimethyl-ammoniumchlorid (Chlorcholinchlorid-CCC) wurde in ihrer Wirkung von den Mitteln gemäss der Erfindung übertroffen (Ergebnisse s. Tabelle 2 und 3).

Tab. 2 Beeinflussung des Längenwachstums von Raps
Bodenbehandlung

| Wirkstoff Nr | Aufwandmenge kg/ha | Pflanzenhöhe cm | relativ |
|---|---|---|---|
| Kontrolle (unbehandelt) | – | 10,8 | 100 |
| CCC | 3,0 | 11,0 | 101,9 |
| | 12,0 | 10,8 | 100 |
| 32 | 3,0 | 9,5 | 88,0 |
| | 12,0 | 7,5 | 69,4 |
| 45 | 3,0 | 8,2 | 75,9 |
| | 12,0 | 6,0 | 55,6 |
| 46 | 3,0 | 9,5 | 88,0 |
| | 12,0 | 7,0 | 64,8 |
| 50 | 3,0 | 9,2 | 85,2 |
| | 12,0 | 6,3 | 58,3 |
| 55 | 3,0 | 9,5 | 88,0 |
| | 12,0 | 8,0 | 74,1 |
| 57 | 3,0 | 9,5 | 88,0 |
| | 12,0 | 7,0 | 64,8 |
| 58 | 3,0 | 9,0 | 83,3 |
| | 12,0 | 7,5 | 69,4 |
| 59 | 3,0 | 9,0 | 83,3 |
| | 12,0 | 5,8 | 53,7 |

Tab. 3 Beeinflussung des Längenwachstums von Raps
Blattbehandlung

| Wirkstoff Nr. | Aufwandmenge kg/ha | Pflanzenhöhe cm | relativ |
|---|---|---|---|
| Kontrolle (unbehandelt) | – | 18,2 | 100 |
| CCC | 3,0 | 17,0 | 93,4 |
| | 12,0 | 16,0 | 87,9 |
| 22 | 3,0 | 15,5 | 85,2 |
| | 12,0 | 13,0 | 71,4 |
| 32 | 3,0 | 14,0 | 77,0 |
| | 12,0 | 12,4 | 68,1 |
| 10 | 3,0 | 15,8 | 86,8 |
| | 12,0 | 12,7 | 69,8 |
| 42 | 3,0 | 15,5 | 85,2 |
| | 12,0 | 12,9 | 70,9 |
| 41 | 3,0 | 15,0 | 82,4 |
| | 12,0 | 12,6 | 69,2 |
| 50 | 3,0 | 15,0 | 82,4 |
| | 12,0 | 12,6 | 69,2 |
| 63 | 3,0 | 16,0 | 87,9 |
| | 12,0 | 14,2 | 78,0 |

## Patentansprüche

für folgende Vertragsstaaten: BE, CH, DE, FR, GB, LU, NL, SE

1. Verfahren zur Regulierung des Wachstums von Rapspflanzen durch Behandlung der Pflanzen oder des Bodens mit einer Verbindung der Formel

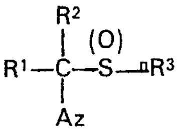

(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Verfahren nach Anspruch 1, dadurch gekennzeichnet, dass man eine Verbindung verwendet, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

## Claims

for the Contracting states: BE, CH, DE, FR, GB, LU, NL, SE

1. A process for regulating the growth of rape plants by treating the plants or the soil with a compound of the formula

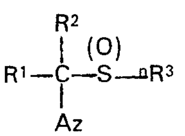

(I)

where
$R^1$ denotes hydrogen, alkyl, methoxycarbonyl, or substituted or unsubstituted aryl,
$R^2$ denotes hydrogen or alkyl,
$R^3$ denotes alkyl, alkenyl, alkynyl, substituted orunsubstituted phenyl, or substituted or unsubstituted aralkyl,
Az denotes imidazol-1-yl, 1,2,4-triazol-1-yl, or 1,2,4-triazol-4-yl, and
n denotes 0, 1 or 2, or a salt or metal complex thereof.

2. A process as claimed in claim 1, characterized in that a compound selected from the group consisting of tert-butyl-[(2,4-dichlorophenyl)-1,2,4-triazol-1-yl-methyl]-sulfide, tert-butyl-[(2-methylphenyl)-1,2,4-triazol-1-yl-methyl]-sulfide, tert-butyl-[1-(1,2,4-triazol-1-yl)-butyl]-sulfide, tert-butyl-[1-(1,2,4-triazol-1-yl)-3-methylbutyl]-sulfide and 4-chlorophenyl-[(1′-1″,2″,4″-triazol-1″-yl)-3′,3′-dimethylbutyl)]-sulfide is used.

## Revendications

pour les Etats contractants: BE, CH, DE, FR, GB, LU, NL, SE

1. Procédé pour régulariser la croissance des plantes de colza par traitement des plantes ou du sol avec un composé ou ses sels ou complexes métalliques, de formule

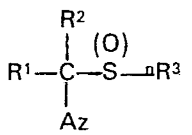

(I)

dans laquelle
$R^1$ représente hydrogène, alkyle, méthoxycarbonyle ou aryle éventuellement substitué,
$R^2$ hydrogène ou alkyle,
$R^3$ alkyle, alcényle, alcinyle, phényle éventuellement substitué ou aralkyle éventuellement substitué,
Az imidazol-1-yle, 1,2,4-triazol-1-yle ou 1,2,4-triazol-4-yle et
n 0, 1 ou 2 ou leurs sels ou complexes métalliques.

2. Procédé selon la revendication 1 caractérisé par le fait que l'on utilise un composé choisi dans le groupe constitué par les sulfures de tert.-butyl-[(2,4-dichlorophényl)-1,2,4-triazol-1-yl-méthyle], tert.-butyl-[(2-méthyl-phényl)-1,2,4-triazol-1-yl-méthyle], tert.-butyl-[1-(1,2,4-triazol-1-yl)-butyle], tert.-butyl-[1-(1,2,4-triazol-1-yl)-3-méthyl-butyle] et 4-chlorophényl-[1′-(1″,2″,4″-triazol-1″-yl)-3′,3′-diméthylbutyle)].

Tab. 2 Beeinflussung des Längenwachstums von Raps
Bodenbehandlung

| Wirkstoff Nr | Aufwand-menge kg/ha | Pflanzenhöhe cm | relativ |
|---|---|---|---|
| Kontrolle (unbehandelt) | - | 10,8 | 100 |
| CCC | 3,0 | 11,0 | 101,9 |
| | 12,0 | 10,8 | 100 |
| 32 | 3,0 | 9,5 | 88,0 |
| | 12,0 | 7,5 | 69,4 |
| 45 | 3,0 | 8,2 | 75,9 |
| | 12,0 | 6,0 | 55,6 |
| 46 | 3,0 | 9,5 | 88,0 |
| | 12,0 | 7,0 | 64,8 |
| 50 | 3,0 | 9,2 | 85,2 |
| | 12,0 | 6,3 | 58,3 |
| 55 | 3,0 | 9,5 | 88,0 |
| | 12,0 | 8,0 | 74,1 |
| 57 | 3,0 | 9,5 | 88,0 |
| | 12,0 | 7,0 | 64,8 |
| 58 | 3,0 | 9,0 | 83,3 |
| | 12,0 | 7,5 | 69,4 |
| 59 | 3,0 | 9,0 | 83,3 |
| | 12,0 | 5,8 | 53,7 |

Tab. 3 Beeinflussung des Längenwachstums von Raps
Blattbehandlung

| Wirkstoff Nr. | Aufwand-menge kg/ha | Pflanzenhöhe cm | relativ |
|---|---|---|---|
| Kontrolle (unbehandelt) | - | 18,2 | 100 |
| CCC | 3,0 | 17,0 | 93,4 |
| | 12,0 | 16,0 | 87,9 |
| 22 | 3,0 | 15,5 | 85,2 |
| | 12,0 | 13,0 | 71,4 |
| 32 | 3,0 | 14,0 | 77,0 |
| | 12,0 | 12,4 | 68,1 |
| 10 | 3,0 | 15,8 | 86,8 |
| | 12,0 | 12,7 | 69,8 |
| 42 | 3,0 | 15,5 | 85,2 |
| | 12,0 | 12,9 | 70,9 |
| 41 | 3,0 | 15,0 | 82,4 |
| | 12,0 | 12,6 | 69,2 |
| 50 | 3,0 | 15,0 | 82,4 |
| | 12,0 | 12,6 | 69,2 |
| 63 | 3,0 | 16,0 | 87,9 |
| | 12,0 | 14,2 | 78,0 |

Tab. 4 Beeinflussung des Längenwachstums von Weizen
Bodenbehandlung

| Wirkstoff Nr. | Aufwand-menge kg/ha | Pflanzenhöhe cm | relativ |
|---|---|---|---|
| Kontrolle (unbehandelt) | - | 33,0 | 100 |

Tabelle 4 (Fortsetzung)

| | | | |
|---|---|---|---|
| CCC | 3,0 | 26,0 | 78,8 |
| | 12,0 | 24,0 | 72,2 |
| 45 | 3,0 | 24,0 | 72,2 |
| | 12,0 | 22,0 | 66,7 |

Tab. 5 Beeinflussung des Längenwachstums von Gerste
Bodenbehandlung

| Wirkstoff Nr. | Aufwand-menge kg/ha | Pflanzenhöhe cm | relativ |
|---|---|---|---|
| Kontrolle (unbehandelt) | - | 33,0 | 100 |
| CCC | 3,0 | 30,0 | 90,9 |
| | 12,0 | 28,0 | 84,8 |
| 46 | 3,0 | 29,0 | 87,9 |
| | 12,0 | 26,0 | 78,8 |

**Patentansprüche**

für folgende Vertragsstaaten: AT + JT

1. Mittel zur Regulierung des Pflanzenwachstums enthaltend eine Verbindung der Formel

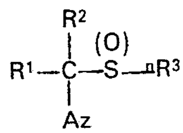

(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Mittel zur Regulierung des Pflanzenwachstums enthaltend eine Verbindung, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

3. Verfahren zur Regulierung des Pflanzenwachstums durch Behandlung der Pflanzen oder des Bodens mit einer Verbindung der in Anspruch 1 definierten Formel.

**Claims**

for the Contracting states: AT, IT

1. An agent for regulating plant growth containing a compound of the formula

1. Verfahren zur Regulierung des Wachstums von Rapspflanzen durch Behandlung der Pflanzen oder des Bodens mit einer Verbindung der Formel

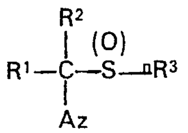
(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Verfahren nach Anspruch 1, dadurch gekennzeichnet, dass man eine Verbindung verwendet, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

**Claims**

for the Contracting states: BE, CH, DE, FR, GB, LU, NL, SE

1. A process for regulating the growth of rape plants by treating the plants or the soil with a compound of the formula

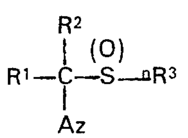
(I)

where
$R^1$ denotes hydrogen, alkyl, methoxycarbonyl, or substituted or unsubstituted aryl,
$R^2$ denotes hydrogen or alkyl,
$R^3$ denotes alkyl, alkenyl, alkynyl, substituted orunsubstituted phenyl, or substituted or unsubstituted aralkyl,
Az denotes imidazol-1-yl, 1,2,4-triazol-1-yl, or 1,2,4-triazol-4-yl, and
n denotes 0, 1 or 2, or a salt or metal complex thereof.

2. A process as claimed in claim 1, characterized in that a compound selected from the group consisting of tert-butyl-[(2,4-dichlorophenyl)-1,2,4-triazol-1-yl-methyl]-sulfide, tert-butyl-[(2-methylphenyl)-1,2,4-triazol-1-yl-methyl]-sulfide, tert-butyl-[1-(1,2,4-triazol-1-yl)-butyl]-sulfide, tert-butyl-[1-(1,2,4-triazol-1-yl)-3-methylbutyl]-sulfide and 4-chlorophenyl-[(1′-1″,2″,4″-triazol-1″-yl)-3′,3′-dimethylbutyl)]-sulfide is used.

**Revendications**

pour les Etats contractants: BE, CH, DE, FR, GB, LU, NL, SE

1. Procédé pour régulariser la croissance des plantes de colza par traitement des plantes ou du sol avec un composé ou ses sels ou complexes métalliques, de formule

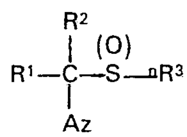
(I)

dans laquelle
$R^1$ représente hydrogène, alkyle, méthoxycarbonyle ou aryle éventuellement substitué,
$R^2$ hydrogène ou alkyle,
$R^3$ alkyle, alcényle, alcinyle, phényle éventuellement substitué ou aralkyle éventuellement substitué,
Az imidazol-1-yle, 1,2,4-triazol-1-yle ou 1,2,4-triazol-4-yle et
n 0, 1 ou 2 ou leurs sels ou complexes métalliques.

2. Procédé selon la revendication 1 caractérisé par le fait que l'on utilise un composé choisi dans le groupe constitué par les sulfures de tert.-butyl-[(2,4-dichlorophényl)-1,2,4-triazol-1-yl-méthyle], tert.-butyl-[(2-méthyl-phényl)-1,2,4-triazol-1-yl-méthyle], tert.-butyl-[1-(1,2,4-triazol-1-yl)-butyle], tert.-butyl-[1-(1,2,4-triazol-1-yl)-3-méthyl-butyle] et 4-chlorophényl-[1′-(1″,2″,4″-triazol-1″-yl)-3′,3′-diméthylbutyle)].

Tab. 2 Beeinflussung des Längenwachstums von Raps
Bodenbehandlung

| Wirkstoff Nr | Aufwand-menge kg/ha | Pflanzenhöhe cm | relativ |
|---|---|---|---|
| Kontrolle (unbehandelt) | - | 10,8 | 100 |
| CCC | 3,0 | 11,0 | 101,9 |
| | 12,0 | 10,8 | 100 |
| 32 | 3,0 | 9,5 | 88,0 |
| | 12,0 | 7,5 | 69,4 |
| 45 | 3,0 | 8,2 | 75,9 |
| | 12,0 | 6,0 | 55,6 |
| 46 | 3,0 | 9,5 | 88,0 |
| | 12,0 | 7,0 | 64,8 |
| 50 | 3,0 | 9,2 | 85,2 |
| | 12,0 | 6,3 | 58,3 |
| 55 | 3,0 | 9,5 | 88,0 |
| | 12,0 | 8,0 | 74,1 |
| 57 | 3,0 | 9,5 | 88,0 |
| | 12,0 | 7,0 | 64,8 |
| 58 | 3,0 | 9,0 | 83,3 |
| | 12,0 | 7,5 | 69,4 |
| 59 | 3,0 | 9,0 | 83,3 |
| | 12,0 | 5,8 | 53,7 |

Tab. 3 Beeinflussung des Längenwachstums von Raps
Blattbehandlung

| Wirkstoff Nr. | Aufwand-menge kg/ha | Pflanzenhöhe cm | relativ |
|---|---|---|---|
| Kontrolle (unbehandelt) | - | 18,2 | 100 |
| CCC | 3,0 | 17,0 | 93,4 |
| | 12,0 | 16,0 | 87,9 |
| 22 | 3,0 | 15,5 | 85,2 |
| | 12,0 | 13,0 | 71,4 |
| 32 | 3,0 | 14,0 | 77,0 |
| | 12,0 | 12,4 | 68,1 |
| 10 | 3,0 | 15,8 | 86,8 |
| | 12,0 | 12,7 | 69,8 |
| 42 | 3,0 | 15,5 | 85,2 |
| | 12,0 | 12,9 | 70,9 |
| 41 | 3,0 | 15,0 | 82,4 |
| | 12,0 | 12,6 | 69,2 |
| 50 | 3,0 | 15,0 | 82,4 |
| | 12,0 | 12,6 | 69,2 |
| 63 | 3,0 | 16,0 | 87,9 |
| | 12,0 | 14,2 | 78,0 |

Tab. 4 Beeinflussung des Längenwachstums von Weizen
Bodenbehandlung

| Wirkstoff Nr. | Aufwand-menge kg/ha | Pflanzenhöhe cm | relativ |
|---|---|---|---|
| Kontrolle (unbehandelt) | - | 33,0 | 100 |

Tabelle 4 (Fortsetzung)

| | | | |
|---|---|---|---|
| CCC | 3,0 | 26,0 | 78,8 |
| | 12,0 | 24,0 | 72,2 |
| 45 | 3,0 | 24,0 | 72,2 |
| | 12,0 | 22,0 | 66,7 |

Tab. 5 Beeinflussung des Längenwachstums von Gerste
Bodenbehandlung

| Wirkstoff Nr. | Aufwand-menge kg/ha | Pflanzenhöhe cm | relativ |
|---|---|---|---|
| Kontrolle (unbehandelt) | - | 33,0 | 100 |
| CCC | 3,0 | 30,0 | 90,9 |
| | 12,0 | 28,0 | 84,8 |
| 46 | 3,0 | 29,0 | 87,9 |
| | 12,0 | 26,0 | 78,8 |

**Patentansprüche**

für folgende Vertragsstaaten: AT + JT

1. Mittel zur Regulierung des Pflanzenwachstums enthaltend eine Verbindung der Formel

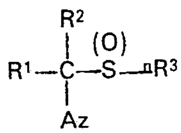
(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Mittel zur Regulierung des Pflanzenwachstums enthaltend eine Verbindung, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

3. Verfahren zur Regulierung des Pflanzenwachstums durch Behandlung der Pflanzen oder des Bodens mit einer Verbindung der in Anspruch 1 definierten Formel.

**Claims**

for the Contracting states: AT, IT

1. An agent for regulating plant growth containing a compound of the formula

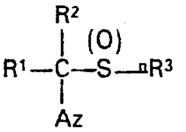

(I)

where
$R^1$ denotes hydrogen, alkyl, methoxycarbonyl, or substituted or unsubstituted aryl,
$R^2$ denotes hydrogen or alkyl,
$R^3$ denotes alkyl, alkenyl, alkynyl, substituted orunsubstituted phenyl, or substituted or unsubstituted aralkyl,
Az denotes imidazol-1-yl, 1,2,4-triazol-1-yl, or 1,2,4-triazol-4-yl, and
n denotes 0, 1 or 2, or a salt or metal complex thereof.

2. An agent for regulating plant growth containing a compound selected from the group consisting of tert-butyl-[(2,4-dichlorophenyl)-1,2,4-triazol-1-yl-methyl]-sulfide, tert-butyl-[(2-methylphenyl)-1,2,4-triazol-1-yl-methyl]-sulfide, tert-butyl-[1-(1,2,4-triazol-1-yl)-butyl]-sulfide, tert-butyl-[1-(1,2,4-triazol-1-yl)-3-methylbutyl]-sulfide and 4-chlorophenyl-[(1′-1″,2″,4″-triazol-1″-yl)-3′,3′-dimethylbutyl)]-sulfide is used.

3. A process for regulating plant growth by treating the plants or the soil with a compound of the formula defined in claim 1.

**Revendications**

pour les Etats contractants: AT, IT

1. Moyen pour régulariser la croissance des plantes, contenant un composé ou ses sels ou complexes métalliques de formule

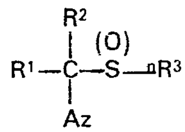

(I)

dans laquelle
$R^1$ représente hydrogène, alkyle, méthoxycarbonyle ou aryle éventuellement substitué,
$R^2$ hydrogène ou alkyle,
$R^3$ alkyle, alcényle, alcinyle, phényle éventuellement substitué ou aralkyle éventuellement substitué,
Az imidazol-1-yle, 1,2,4-triazol-1-yle ou 1,2,4-triazol-4-yle et
n 0, 1 ou 2 ou leurs sels ou complexes métalliques.

2. Moyen pour régulariser la croissance des plantes contenant un composé choisi dans le groupe constitué par les sulfures de tert.-butyl-[(2,4-dichlorophényl)-1,2,4-triazol-1-yl-méthyle], tert.-butyl-[(2-méthyl-phényl)-1,2,4-triazol-1-yl-méthyle], tert.-butyl-[1-(1,2,4-triazol-1-yl)-butyle, tert.-butyl-[1-(1,2,4-triazol-1-yl)-3-méthyl-butyle] et 4-chlorophényl-[1′-(1″,2″,4″-triazol-1″-yl)-3′,3′-dimethylbutyle)].

3. Procédé pour régulariser la croissance des plantes par traitement des plantes ou du sol avec un composé de formule définie à la revendication 1.

1. Verfahren zur Regulierung des Wachstums von Rapspflanzen durch Behandlung der Pflanzen oder des Bodens mit einer Verbindung der Formel

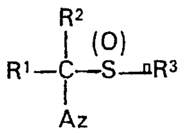

(I)

in der
$R^1$ Wasserstoff, Alkyl, Methoxycarbonyl oder gegebenenfalls substituiertes Aryl
$R^2$ Wasserstoff oder Alkyl
$R^3$ Alkyl, Alkenyl, Alkinyl, gegebenenfalls substituiertes Phenyl oder gegebenenfalls substituiertes Aralkyl
Az Imidazol-1-yl, 1,2,4-Triazol-1-yl oder 1,2,4-Triazol-4-yl und
n 0, 1 oder 2 bedeuten oder deren Salze oder Metallkomplexe.

2. Verfahren nach Anspruch 1, dadurch gekennzeichnet, dass man eine Verbindung verwendet, ausgewählt aus der Gruppe, bestehend aus tert.-Butyl-[(2,4-dichlorphenyl)-1,2,4-triazol-1-yl-methyl]-sulfid, tert.-Butyl-[(2-methyl-phenyl)-1,2,4-triazol-1-yl-methyl]-sulfid, tert.-Butyl-[1-(1,2,43-triazol-1-yl)-butyl]-sulfid, tert.-Butyl-[1-(1,2,4-triazol-1-yl)-3-methylbutyl]-sulfid und 4-Chlorphenyl-[1′-(1″,2″,4″-triazol-1″k-yl)-3′,3′-dimethylbutyl)]-sulfid.

**Claims**

for the Contracting states: BE, CH, DE, FR, GB, LU, NL, SE

1. A process for regulating the growth of rape plants by treating the plants or the soil with a compound of the formula

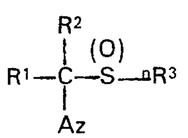

(I)

where
$R^1$ denotes hydrogen, alkyl, methoxycarbonyl, or substituted or unsubstituted aryl,
$R^2$ denotes hydrogen or alkyl,
$R^3$ denotes alkyl, alkenyl, alkynyl, substituted orunsubstituted phenyl, or substituted or unsubstituted aralkyl,
Az denotes imidazol-1-yl, 1,2,4-triazol-1-yl, or 1,2,4-triazol-4-yl, and
n denotes 0, 1 or 2, or a salt or metal complex thereof.

2. A process as claimed in claim 1, characterized in that a compound selected from the group consisting of tert-butyl-[(2,4-dichlorophenyl)-1,2,4-triazol-1-yl-methyl]-sulfide, tert-butyl-[(2-methylphenyl)-1,2,4-triazol-1-yl-methyl]-sulfide, tert-butyl-[1-(1,2,4-triazol-1-yl)-butyl]-sulfide, tert-butyl-[1-(1,2,4-triazol-1-yl)-3-methylbutyl]-sulfide and 4-chlorophenyl-[(1′-1″,2″,4″-triazol-1″-yl)-3′,3′-dimethylbutyl)]-sulfide is used.

**Revendications**

pour les Etats contractants: BE, CH, DE, FR, GB, LU, NL, SE

1. Procédé pour régulariser la croissance des plantes de colza par traitement des plantes ou du sol avec un composé ou ses sels ou complexes métalliques, de formule

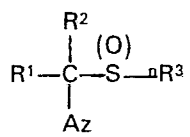

(I)

dans laquelle
$R^1$ représente hydrogène, alkyle, méthoxycarbonyle ou aryle éventuellement substitué,
$R^2$ hydrogène ou alkyle,
$R^3$ alkyle, alcényle, alcinyle, phényle éventuellement substitué ou aralkyle éventuellement substitué,
Az imidazol-1-yle, 1,2,4-triazol-1-yle ou 1,2,4-triazol-4-yle et
n 0, 1 ou 2 ou leurs sels ou complexes métalliques.

2. Procédé selon la revendication 1 caractérisé par le fait que l'on utilise un composé choisi dans le groupe constitué par les sulfures de tert.-butyl-[(2,4-dichlorophényl)-1,2,4-triazol-1-yl-méthyle], tert.-butyl-[(2-méthyl-phényl)-1,2,4-triazol-1-yl-méthyle], tert.-butyl-[1-(1,2,4-triazol-1-yl)-butyle], tert.-butyl-[1-(1,2,4-triazol-1-yl)-3-méthyl-butyle] et 4-chlorophényl-[1′-(1″,2″,4″-triazol-1″-yl)-3′,3′-diméthylbutyle)].

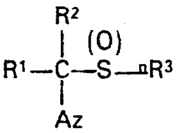
(I)

where
$R^1$ denotes hydrogen, alkyl, methoxycarbonyl, or substituted or unsubstituted aryl,
$R^2$ denotes hydrogen or alkyl,
$R^3$ denotes alkyl, alkenyl, alkynyl, substituted orunsubstituted phenyl, or substituted or unsubstituted aralkyl,
Az denotes imidazol-1-yl, 1,2,4-triazol-1-yl, or 1,2,4-triazol-4-yl, and
n denotes 0, 1 or 2, or a salt or metal complex thereof.

2. An agent for regulating plant growth containing a compound selected from the group consisting of tert-butyl-[(2,4-dichlorophenyl)-1,2,4-triazol-1-yl-methyl]-sulfide, tert-butyl-[(2-methylphenyl)-1,2,4-triazol-1-yl-methyl]-sulfide, tert-butyl-[1-(1,2,4-triazol-1-yl)-butyl]-sulfide, tert-butyl-[1-(1,2,4-triazol-1-yl)-3-methylbutyl]-sulfide and 4-chlorophenyl-[(1′-1″,2″,4″-triazol-1″-yl)-3′,3′-dimethylbutyl)]-sulfide is used.

3. A process for regulating plant growth by treating the plants or the soil with a compound of the formula defined in claim 1.

**Revendications**

pour les Etats contractants: AT, IT

1. Moyen pour régulariser la croissance des plantes, contenant un composé ou ses sels ou complexes métalliques de formule

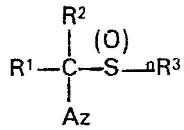
(I)

dans laquelle
$R^1$ représente hydrogène, alkyle, méthoxycarbonyle ou aryle éventuellement substitué,
$R^2$ hydrogène ou alkyle,
$R^3$ alkyle, alcényle, alcinyle, phényle éventuellement substitué ou aralkyle éventuellement substitué,
Az imidazol-1-yle, 1,2,4-triazol-1-yle ou 1,2,4-triazol-4-yle et
n 0, 1 ou 2 ou leurs sels ou complexes métalliques.

2. Moyen pour régulariser la croissance des plantes contenant un composé choisi dans le groupe constitué par les sulfures de tert.-butyl-[(2,4-dichlorophényl)-1,2,4-triazol-1-yl-méthyle], tert.-butyl-[(2-méthyl-phényl)-1,2,4-triazol-1-yl-méthyle], tert.-butyl-[1-(1,2,4-triazol-1-yl)-butyle, tert.-butyl-[1-(1,2,4-triazol-1-yl)-3-méthyl-butyle] et 4-chlorophényl-[1′-(1″,2″,4″-triazol-1″-yl)-3′,3′-dimethylbutyle)].

3. Procédé pour régulariser la croissance des plantes par traitement des plantes ou du sol avec un composé de formule définie à la revendication 1.